# EUROPÄISCHE PATENTSCHRIFT

(11) **EP 1 313 682 B1**
(45) Veröffentlichungstag und Bekanntmachung des Hinweises auf die Patenterteilung: **04.10.2006**
(21) Anmeldenummer: 01956206.5
(22) Anmeldetag: 01.08.2001
(51) Int. Cl.: C04B 35/636, C04B 26/28

(54) **FLOCKUNGS- BZW. BINDEMITTEL FÜR DEN KERAMISCHEN BEREICH**
FLOCCULANT OR BINDING AGENT FOR THE CERAMICS INDUSTRY
FLOCULANT OU LIANT DESTINES A L'INDUSTRIE CERAMIQUE

(30) Priorität: 21.08.2000 AT 14352000
(43) Veröffentlichungstag der Anmeldung: 28.05.2003
(73) Patentinhaber: Südzucker Aktiengesellschaft Mannheim/Ochsenfurt, 68165 Mannheim (DE)
(72) Erfinder: GRÜLL, Dietmar, A-3442 Langenschönbichl (AT); WASTYN, Marnik, Michel, A-2320 Schwechat (AT); KOZICH, Martin, A-1140 Wien (AT)
(74) Vertreter: Pawloy, Peter Michael
(86) Internationale Anmeldenummer: PCT/AT2001/000260
(87) Internationale Veröffentlichungsnummer: WO 2002/016285

(56) Entgegenhaltungen:
- EP-A- 0 816 299
- AT-B- 403 705
- US-A- 4 414 337
- US-A- 5 582 670
- US-A- 5 945 049

## Beschreibung

Die Erfindung betrifft Flockungs- bzw. Bindemittel für den keramischen Bereich.

Bei der Herstellung von keramischen Produkten werden anorganische Grundstoffe, meist anorganische Fasermaterialien, in eine wässerige Schlämme eingebracht, die als "Slurry" bezeichnet wird. Durch Zugabe des Flockungs- bzw. Bindemittels und gegebenenfalls weiterer Komponenten kommt es zur Ausbildung von Flocken. Nach Abtrennung der gebildeten Flocken wird der Feuchtkuchen zunächst getrocknet und dann nach verschiedenen thermischen Verfahren zu einer Keramik gebrannt.

Zur Herstellung von geeigneten Slurries ist eine ganze Anzahl von zusatzstoffen erforderlich, darunter auch Flockungs- und/oder Bindemittel, mit welchen die anorganischen Materialien im Slurry in eine zur abschließenden Hitzebehandlung geeignete Form/Verteilung gebracht werden.

Aufgrund der im letzten Jahrzehnt verstärkten Präferenz für den Umweltschutz besteht großes Interesse, bei der Herstellung von Keramiken Flockungs- bzw. Bindemittel zu verwenden, die bei der abschließenden thermischen Behandlung, die bei der Verwendung von anorganischen Stoffen auch als Carbonisierung bezeichnet wird, keine umweltrelevanten Schadstoffe produzieren. Während in der Vergangenheit oftmals aromatische Verbindungen, beispielsweise Phenolharze, wie in der DE 32 31 100-Al bei der Herstellung von Formkörpern aus Siliciumcarbid beschrieben, verwendet wurden, werden nun seit geraumer zeit stärkehaltige Produkte erfolgreich eingesetzt.

Daher haben Flockungs- bzw. Bindemittel auf Stärkebasis im Bereich der keramischen Erzeugnisse ein breites Anwendungsspektrum gefunden. Besondere Bedeutung bekommt dies dadurch, dass Flockungs- bzw. Bindemittel auf Stärkebasis natürlichen Ursprungs und somit umweltfreundlicher sind. So werden bei der Carbonisierung keine umweltbedenklichen Schadstoffe freigesetzt.

So wird in der US-PS 5,618,767 der Einsatz von Kartoffel-, Mais und Weizenstärkederivaten beschrieben, wobei auf die Vorzüge der Stärke bei der Carbonisierung hingewiesen wird. Im Speziellen wird dabei der Einsatz der genannten Stärken in der Herstellung von keramischen Produkten auf Basis von Siliciumcarbid beschrieben.

In der US-PS 3,224,927 wird ausführlich über die Möglichkeiten von kationischer Stärke zur Herstellung hitzebeständiger Produkte diskutiert. Dabei wird auf die Vorzüge derartiger Stärkeprodukte hingewiesen, die in einem System von Faser und dem Bindemittel Silica Sol optimal integriert werden können. Bei den beschriebenen Stärken handelt es sich um kommerzielle kationische Stärken von National Starch, die im Zuge der Flockung zunächst verkleistert werden müssen.

In der WO 99/15322 und der US 5,945,049 wird die Methode des Vakuumformprozesses zur Herstellung von keramischen Formkörpern beschrieben. Bei diesem Prozess werden bevorzugterweise Flockungsmittel zugegeben, wobei vor allem kaltwasserlösliche kationische Stärken verwendet werden. Speziell angeführt werden handelsübliche Produkte auf Basis von Maisstärke oder herkömmlicher Kartoffelstärke.

In der EP 094 731 A und der US 4,414,337 wird über die Herstellung von Formkeramiken informiert. Auch hier wird Stärke, im speziellen Maisstärke, aber auch Reisstärke, Tapiocastärke oder herkömmliche Kartoffelstärke als Bindemittel eingesetzt.

In der EP 0 816 299 A wird ein Baustoffzusatzmittel auf der Basis von nativer oder derivatisierter Kartoffelstärke beschrieben.

Aus der AT 403 705 B geht ein Beschichtungsmittel für Papier, Karton und Pappe hervor, dass ein Bindemittel auf der Basis von Amylopektin-Kartoffelstärke enthält.

Diverse Mittel und Methoden zur Blattherstellung gehen aus der US 5,582,670 hervor, worin u.a. Stärke als Zusatzstoff bei Blättern Anwendung findet.

Im beschriebenen Stand der Technik werden somit Stärkeprodukte in nativer oder in abgebauter und/oder modifizierter und/oder derivatisierter Form als Flockungs- bzw. Bindemittel verwendet.

Stärke ist ein pflanzliches Naturprodukt. Sie besteht im Wesentlichen aus einem Glucosepolymer, das in der Regel eine Zusammensetzung aus zwei Bestandteilen darstellt, nämlich Amylopektin und Amylose. Diese sind ihrerseits wieder keine einheitlichen Substanzen, sondern sind Gemische von Polymeren mit unterschiedlichen Molekulargewichten. Amylose besteht im Wesentlichen aus unverzweigten Polysacchariden, in denen die Glucose in alpha-1,4-Bindung vorliegt. Amylopektin ist dagegen ein stark verzweigtes Glucosepolymer, bei dem die Glucoseeinheiten neben den alpha-1,4-Bindungen an den Verzweigungsstellen in 1,6-Bindung enthalten sind.

Natürliche Stärken haben in der Regel einen Amylosegehalt von 15 bis 30 %; nur Maissorten des Waxy-Typs liefern eine Stärke, die fast ausschließlich aus Amylopektin besteht. Das Anwendungsgebiet dieser Stärke, der sogenannten Wachsmaisstärke, liegt überwiegend im Lebensmittelbereich. Hier wird als besondere Tatsache geschätzt, dass die amylosefreie Stärke bei der Verkleisterung in weit geringerem Maße Fäden zieht und daher ein besseres Mundgefühl ergibt. Es hat sich auch gezeigt, dass Amylopektinstärke geringere Retrogradationserscheinungen zeigt, d.h. weniger leicht zur Wiedervereinigung bereits getrennter Ketten neigt, als eine amylosereiche Stärke.

Der Anbau von Wachsmais ist in Ländern mit kaltem oder temperiertem Klima, wie in Österreich, Deutschland, Belgien, den Niederlanden, Großbritannien, Polen u.s.w., wirtschaftlich wenig sinnvoll bzw. unmöglich. Daher konnte sich in diesen Gebieten der Wachsmais aus Kostengründen nicht durchsetzen. Eine übliche Stärkequelle ist in diesen Ländern dagegen die Kartoffel. Im Verhältnis zu Getreidestärke enthält die Kartoffelstärke eine geringere Menge an Lipiden und Proteinen und eine deutliche Menge Phosphat-Estergruppen. Eine diesbezügliche vergleichende Darstellung, auch unter Berücksichtigung der im gegenständlichen Fall beanspruchten Amylopektin-Kartoffelstärke, ist im experimentellen Teil der Beschreibung der vorliegenden Erfindung zusammengestellt.

Es sind Verfahren bekannt, um den Amylosegehalt von Stärke auf physikalischem oder chemischem Weg herabzusetzen. Der Aufwand hierfür ist jedoch beträchtlich und kann nur betrieben werden, wenn wirtschaftliche Gesichtspunkte es erlauben.

Bei diesen Verfahren zur Reduktion des Amylosegehalts ist jedoch eine Behandlung bei erhöhten Temperaturen (in der Regel bei über 140°C) erforderlich, wodurch es gezwungenermaßen zu Abbauprodukten kommt. Derartige Abbauprodukte können jedoch in vielen Anwendungsbereichen stören. Darüberhinaus ist das Fraktionierungsverfahren sehr aufwendig und kostenintensiv, sodass sich derartige Produkte für einen großtechnischen Einsatz bisher nicht durchsetzen konnten. Amylopektin-Kartoffelstärken, die durch eine Fraktionierung hergestellt werden, werden im Rahmen der vorliegenden Erfindung als fraktionierte Amylopektin-Kartoffelstärke (FAP-KS) bezeichnet.

Durch die im letzten Jahrzehnt erfolgreich gelungene gentechnische Veränderung der Kartoffel mit dem Ziel der Gewinnung einer amylosefreien Stärke konnten völlig neue Stärketypen zugänglich gemacht werden (WO 92/11376 A). Dadurch ist es beispielsweise erstmals möglich geworden, eine Amylose-arme bzw. Amylose-freie Kartoffelstärke zu erhalten, in der die für Kartoffelstärke charakteristische dreidimensionale Struktur des Amylopektins vollständig erhalten ist, ohne dass dabei Abbauprodukte oder Abweichungen des dreidimensionalen Netzwerkes von der nativen Struktur entstehen (s. WO 92/11376). Dadurch wird eine Amylopektin-Kartoffelstärke zur Verfügung gestellt, die nicht nur wesentlich definierter ist, sondern sich auch für Derivatisierungsprozesse besonders gut eignet (vgl. auch WO 92/11376 A).

Obgleich eine Vielzahl von Anwendungsmöglichkeiten für diese neuartigen Stärkeprodukte vorgeschlagen worden ist, ist über die tatsächliche technische Verwendbarkeit dieser Stärkeprodukte wegen der bisher geringen zur Verfügung stehenden Mengen nur wenig bekannt. So wird nach wie vor im Stand der Technik Wachsmaisstärke als Einzige der Amylopektin-reichen Stärkeprodukte in industriellem Ausmaß verwendet, da sie sich auf Grund ihrer einfachen Verfügbarkeit gegenüber FAP-KS oder anderen wachsgetreidestärken, die aus Mutanten der üblichen Kulturpflanzen erhalten werden können, bislang am Markt durchgesetzt hat.

Die oben erwähnten, durch gezielte Beeinflussung der Amylose bildenden Enzyme in der Kartoffel hergestellten Amylopektin-reichen Stärken mit nativem Amylopektin-Muster (s. WO 92/11376), die für die Zwecke der vorliegenden Erfindung als Amylopektin-Kartoffelstärke (AP-KS) bezeichnet werden, wurden bislang zwar wie erwähnt für einige Anwendungen vorgeschlagen, nicht jedoch zur Herstellung von keramischen Produkten.

Aufgabe der vorliegenden Erfindung ist es, ein verbessertes Flockungs- oder Bindemittel speziell für den keramischen Bereich bereitzustellen. Weiters soll ein verbessertes Verfahren zur Erzeugung keramischer Erzeugnisse zur Verfügung gestellt werden, mit welchen Keramiken mit verbesserten Eigenschaften erzeugt werden können.

Diese Aufgabe wird erfindungsgemäß gelöst durch eine Verwendung von Flockungs- bzw. Bindemittelzusammensetzung für die Herstellung keramischer Erzeugnisse, welche dadurch gekennzeichnet ist, dass sie Amylopektin-Kartoffelstärke (AP-KS) umfasst.

Überraschenderweise zeigte Amylopektin-Kartoffelstärke bei der Herstellung von keramischen Erzeugnissen wesentlich bessere Eigenschaften als die bislang zu diesem Zweck vorgeschlagenen Produkte, insbesondere im Vergleich zu anderen Stärkeprodukten. Tatsächlich konnte im Rahmen der vorliegenden Erfindung eine maßgebliche Verbesserung speziell gegenüber fraktionierter Amylopektin-Kartoffelstärke (FAP-KS) sowie gegenüber Wachsmaisstärke und selbstverständlich auch gegenüber herkömmlicher Kartoffelstärke sowie gegenüber abgeleiteten Produkten aus diesen Stärkederivaten erzielt werden.

Bislang wurde Amylopektin-reiche Stärke nur zur Verwendung in Bereichen vorgeschlagen, in denen die Eigenschaften bei Raumtemperaturen bzw. bei leicht erhöhten Temperaturen zu Tage traten, beispielsweise in der Textil- und Papierindustrie (siehe z.B. die US-PS 5,582,670). Im keramischen Bereich kam aber bislang weder der Vorschlag noch die Anregung, AP-KS im Zuge des Herstellungsprozesses zu verwenden. Demgemäß konnten auch bislang die völlig überraschenden positiven Eigenschaften der AP-KS sogar gegenüber verwandten Produkten, insbesondere gegenüber anderen Amylopektinreichen Stärken, wie FAP-KS oder Wachsmaisstärke, nicht zu Tage treten.

Unter dem Begriff "Keramik" versteht man im allgemeinen Sprachgebrauch und auch erfindungsgemäß Produkte aus Tonmineralien. Die Vielfalt der keramischen Werkstoffe sowie ihre Anwendungen hat sich in den letzten Jahrzehnten stark erweitert, so dass neben den Tonmineralien heute u.a. auch Carbide, Nitride, Oxide oder Silicide verwendet werden. Mit dieser Entwicklung etablierten sich auch auf dem Markt die Feuerfestkeramiken. Gemäß DIN 51060 versteht am unter den Begriff Feuerfestmaterialien nichtmetallischer Werkstoffe, wie hochschmelzende Oxide, feuerfesten Silikaten, etc. (aber einschließlich auch solche, die eine bestimmten Anteil an Metall enthalten, wie beispielsweise Cermets), die einen Segerkegel-Fallpunkt von mindestens 1500°C haben. Diese Produkte zeichnen sich dadurch aus, dass sie bei einer Temperatur > 800°C über einen längeren zeitraum einsetzbar sind.

Nach der ISO-Empfehlung R 1109 werden sie wie folgt klassifiziert:
1. Tonerde-reiche Erzeugnisse Gruppe 1: > 56 % Al₂O₃
2. Tonerde-reiche Erzeugnisse Gruppe 2: 45 - 56 % Al₂O₃
3. Schamotteerzeugnisse: 30 - 45 % Al₂O₃
4. saure Schamotteerzeugnisse: 10 - 30 % Al₂O₃, < 85 % SiO₂
5. Tondinaserzeugnisse: 85 - 93 % SiO₂
6. Silicaerzeugnisse: > 93 % SiO₂
7. Basische Erzeugnisse: mit variablen Magnesit-Chromit-Mengen,...
8. Spezialerzeugnisse auf Basis von Kohlenstoff, Graphit, Zi-Silikat, Nitriden, Boriden, Cermets,....

Keramische Produkte haben ein großes und breites Anwendungsfeld. Typische Bespiele sind Anwendungen in der Autoindustrie, in industriellen Hochöfen für Feuerfestprodukte oder für Hochtemperaturfilter.

Keramische Erzeugnisse zeichnen sich vor allem durch ihre Porosität aus, die speziell durch die Verwendung stärkehaltiger Flockungs- bzw. Bindemittel erreicht wird.

Obgleich Stärke im Prinzip in anderen Bereichen als Flockungsmittel verwendet worden ist (beispielsweise in der Papierherstellung), stellt der Bereich der Keramikherstellung an ein Flockungsmittel ganz besondere Anforderungen, die einerseits auf die Herstellung eines Slurry aus anorganischen Materialien zurückzuführen sind und andererseits durch den anschließenden Trocknungs-/Formungs- und Brennprozess bedingt sind.

Unter Flockungsmittel versteht man jene Stoffe, die das Zeta-Potential (elektrokinetisches Potential) kolloidaler Teilchen so beeinflussen, dass es zur Bildung von Aggregaten, wie beispielsweise Flocken, kommt. Durch die Flockungsmittel wird das Zeta-Potential dispergierender Teilchen herabgesetzt bzw. aufgehoben. Um eine Flockung überhaupt zu ermöglichen, muss das Flockungsmittel die elektrostatische Abstoßung der im Lösungsmittel, vor allem Wasser, meist negativ geladenen Partikel überwinden.

Stärke bzw. Stärkederivate bewirken ein Zusammenballen der Feststoffpartikel zu großen Einheiten (Flocken), wobei die Anlagerung an die suspendierten Teilchen durch Brückenbildung erfolgt. Gemäß der anerkannten Lehre hängt die Wirksamkeit der Flockungsmittel einerseits vom ionischen Charakter und andererseits von der Molekülkettenlänge ab. Dass die Nativität der Amylopektin-Struktur dabei eine besondere Rolle spielen könnte, wurde bislang nicht erkannt. Darüber hinaus kann die Stärke im Bereich der keramischen Erzeugnisse auch eine bindende Funktion aufweisen. Sie kann beispielsweise ein wichtiges Bindeglied zwischen der Faser und weiteren Hilfsstoffen oder Bindemittel, wie dem Silica Sol, darstellen. Aufgrund ihrer organischen Natur ist die Stärke ein temporäres Bindemittel, welches durch die Hitzebehandlung zu Kohlenstoff konvertiert und mit dem vorhandenen Silizium so eine stabile dreidimensionale Netzwerkstruktur (poröse Matrix) bildet.

Es hat sich erfindungsgemäß gezeigt, dass gerade die AP-KS bei dieser Konvertierung dem erzeugten keramischen Erzeugnis besondere Eigenschaften verleiht. Dazu kommen noch verbesserte Eigenschaften im Zuge des Slurry-Herstellungsprozesses.

Bevorzugterweise ist die AP-KS aus Kartoffeln gewonnen, in denen die Stärkekorn-gebundene Stärkesynthase I (granule-bound starch synthase I, GBSS I), die für die α-1,4-glycosidische Verbindung zum linearen Amylosemolekül zuständig ist, in ihrer Aktivität eingeschränkt oder gänzlich ausgeschalten ist, beispielsweise durch geeignete antisense-Technologie, wie sie in der WO 92/11376 beschrieben ist. Durch Hemmung der GBSS I lässt sich z.B. aus Kartoffeln native AP-KS erzeugen, die einen gegenüber der natürlichen Kartoffelstärke stark erhöhten Anteil an Amylopektin aufweisen, ohne dass dabei die Nachteile der fraktionierten Amylopektin-Kartoffelstärke (Abbauprodukte; thermische Behandlung) in Kauf genommen werden müssen.

Bevorzugterweise wird demgemäß die AP-KS mit einem Gehalt von mindestens 95 %, vorzugsweise mindestens 98 %, Amylopektin am Gesamtstärkeanteil verwendet.

Bevorzugterweise wird die AP-KS aus einer Kartoffel gewonnen, die zum Zwecke der Amylose-Inhibierung durch Züchtung oder molekularbiologische bzw. gentechnische Methoden verändert wurde. Vor allem wird die erfindungsgemäß zu verwendende AP-KS aus einer Kartoffel gewonnen, die durch antisense-Inhibierung eines GBSS-Gens oder durch Cosuppression hinsichtlich der Amylosebildung inhibiert wurde. Hierbei wird bevorzugt die Amylosesynthese behindert bzw. inhibiert, wobei die Amylopektin-Verzweigung bevorzugterweise unverändert belassen wird. Dies ist technisch auch ohne weiteres realisierbar, da die Amylosesynthese und die Ausprägung von Amylopektin-Verzweigungsmuster zwei völlig unabhängige Prozesse in der Pflanze sind. Die beteiligten Enzyme sind für beide Prozesse spezifisch und können jeweils unabhängig voneinander und spezifisch, beispielsweise durch gentechnische Eingriffe, in ihren Aktivitäten beeinflusst werden. Damit kann die AP-KS als bekannte Stärke (Kartoffelstärke) mit verändertem Amylose-/Amylopektinverhältnis bei gleichzeitig völlig unveränderter Qualität (hinsichtlich des Verzweigungsgrades) des Amylopektins erreicht werden. Bei der gentechnischen Herstellung der AP-KS ist auch - im Gegensatz zur Herstellung von FAP-KS - die Stärkequalität eindeutig definierbar und daher einer genauen Erfolgskontrolle zugänglich, wodurch die industrielle Verfügbarkeit der AP-KS sichergestellt wird.

Stärken, die aus gentechnisch manipulierten Kartoffeln gewonnen werden, bei denen der Verzweigungsgrad des Amylopektins verändert worden ist (gegebenenfalls bei unverändert hohem Anteil der Amylose; WO 96/19581), haben sich im Zusammenhang mit der vorliegenden Erfindung nicht als vorteilhaft erwiesen und sind demgemäß - alleine schon auf Grund ihres hohen Amylosegehaltes - auch nicht als AP-KSen im Sinne der vorliegenden Erfindung anzusehen.

Ein weiteres wichtiges Charakteristikum der Amylopektin-Kartoffelstärke ist ihre Molmassenverteilung bzw. ihr mittleres Molekulargewicht. Die Unterschiede zu wachsigen Stärken, wie beispielsweise der Wachsmaisstärke, oder einem durch physikalische bzw. chemische Methoden hergestelltes Amylopektin aus der Kartoffelstärke, wird speziell durch Messungen mittels Size Exclusion Chromatography (SEC) deutlich. Dem entsprechende Daten sind im experimentellen Teil zusammengestellt.

Bevorzugterweise ist die AP-KS in der erfindungsgemäßen Flockungs- oder Bindemittelzusammensetzung modifiziert, insbesondere kationisch modifiziert. Hierbei haben sich vor allem Amylopektin-Kartoffelstärken mit stickstoffhältigen Gruppen, insbesondere mit elektropositiv geladenen quaternären Ammoniumgruppen, als besonders günstig herausgestellt.

Gemäß einer besonders bevorzugten Ausführungsform ist die erfindungsgemäße Amylopektin-Kartoffelstärke ein Amylopektin-Kartoffelstärke-Sulfamat.

Je nach Natur der eingesetzten organischen Faser kann aber sowohl eine Amylopektin-Kartoffelstärke mit anionischer als auch mit kationischer Ladung erforderlich werden. In besonderen Fällen kann auch eine amphotere Amylopektin-Kartoffelstärke eine bevorzugte Variante darstellen.

Aus der Literatur ist eine Vielzahl von Derivaten bekannt, deren Herstellung u.a. in dem Werk "Starch: Chemistry and Technology", R.L. Whistler, Kapitel X und XVII, 1984, und in "Modified Starches: Properties and Uses", herausgegeben von O.B. Wurzburg, Kapitel 2-6, und 9-11, CRC Press, 1986, gut zusammengefasst ist. Im Allgemeinen unterscheidet man hier zwischen anionischen, kationischen und amphoteren Stärkederivaten, wobei die nachfolgenden Derivatisierungsmöglichkeiten für andere Stärkearten Stand der Technik sind.

Unter anionische Modifizierung der Amylopektin-Kartoffelstärke, werden jene Derivate zusammengefasst, wo die freien Hydroxylgruppen der Stärke durch anionische Gruppierungen substituiert werden. Im Unterschied zur Wachsmaisstärke hat die Amylopektin-Kartoffelstärke natürlich gebundene anionische Gruppen, so dass im eigentlichen Sinne hier von einer zusätzlichen anionischen Modifizierung gesprochen werden muss. Es handelt sich dabei um natürlich chemisch gebundene Phosphatgruppen, die damit der Amylopektin-Kartoffelstärke eine zusätzliche spezifische Polyelektrolyteigenschaft verleihen.

Die anionische Derivatisierung lässt sich prinzipiell auf zwei Arten durchführen:
a) Die Modifizierung erfolgt dermaßen, dass es zu einer Veresterung der Amylopektin-Kartoffelstärke kommt. Als Modifizierungsmittel dienen anorganische oder organische verschiedenwertige, meist zweiwertige, Säuren bzw. Salze davon bzw. Ester davon bzw. Anhydride davon. So sind u.a. folgende Säuren, ihre Aufzählung ist nur beispielhaft, geeignet:
   o-Phosphorsäure, m-Phosphorsäure, Poly-Phosphorsäure, unterschiedlichste Schwefelsäuren, verschiedenste Kieselsäuren, die unterschiedlichsten Borsäuren, Oxalsäure, Bernsteinsäure, Glutarsäure, Adipinsäure, Phthalsäure, Citronensäure, etc.. Auch gemischte Ester oder Anhydride können verwendet werden. Bei der Veresterung der Amylopektin-Kartoffelstärke kann diese auch mehrfach erfolgen, so dass beispielsweise Distärkephosphorsäureester hergestellt werden können.
   b) Die Modifizierung erfolgt dermaßen, dass es zu einer Veretherung der Amylopektin-Kartoffelstärke kommt. Als Modifizierungsmittel dienen anorganische oder organische α-substituierte Säuren bzw. Salze davon bzw. Ester davon. Bei diesem Reaktionstyp kommt es zur Abspaltung des α-Substituenten unter Bildung einer Ethergruppe.

Die Amylopektin-Kartoffelstärke ist dadurch beispielsweise zusätzlich mit Phosphat, Phosphonat, Sulfat, Sulfonat oder Carboxylgruppen substituiert. Dies wird beispielsweise durch Umsetzung der Amylopektin-Kartoffelstärke mit α-Halogencarbonsäuren, Chlorhydroxyalkylsulfonaten oder Chlorhydroxyalkylphosphonaten erreicht.

Unter kationischer Modifizierung der Amylopektin-Kartoffelstärke werden jene Derivate zusammengefasst, wo durch Substitution eine positive Ladung in die Stärke eingebracht wird. Die Kationisierungsverfahren erfolgen mit Amino-, Imino-, Ammonium-, Sulfonium- oder Phosphoniumgruppen. Methoden zur Herstellung von kationisierten Stärken sind beispielsweise von D.B. Solareck: Cationic Starches, in dem Buch von O.B. Wurzburg (Hrsg.): Modified Starches: Properties and Uses, CRC Press Inc., Boca Raton, Florida (1986), S. 113 - 130, beschrieben. Solche kationischen Derivate enthalten bevorzugt stickstoffhaltige Gruppen, insbesondere primäre, sekundäre, tertiäre und quartäre Amine, bzw. Sulfonium- und Phosphoniumgruppen, die über Ether- oder Esterbindungen gebunden sind. Bevorzugt ist der Einsatz von kationisierten Amylopektin-Kartoffelstärken, die elektropositiv geladene quartäre Ammoniumgruppen enthalten.

Im Speziellen sollen hier auch die Sulfamate der Amylopektin-Kartoffelstärke genannt werden, deren Herstellung ebenfalls Gegenstand der vorliegenden Erfindung ist. Dieses neue Derivat der Amylopektin-Kartoffelstärke wird durch Umsetzung der gegenständlich beanspruchten Amylopektin-Kartoffelstärke mit Ammonium-, Erdalkali- oder Alkalisulfamaten erzielt. Eine beispielhafte Beschreibung der Herstellung dieses Derivates findet sich auch im experimentellen Teil.

Eine weitere Gruppe stellen die amphoteren Stärken dar. Diese enthalten sowohl anionische als auch kationische Gruppen, wodurch ihre Anwendungsmöglichkeiten sehr spezifisch sind. Meist handelt es sich um kationische Stärken, die entweder durch Phosphatgruppen oder durch Xanthate zusätzlich modifiziert werden. Eine Darstellung zur Herstellung solcher Produkte ist ebenfalls von D.B. Solareck: Cationic Starches, in dem Buch von O.B. Wurzburg (Hrsg.): Modified Starches: Properties and Uses, CRC Press Inc., Boca Raton, Florida (1986), S. 113-130, beschrieben.

Von großer Bedeutung sind Ester und Ether der Amylopektin-Kartoffelstärke. Man unterscheidet zwischen einfachen Stärkeestern und gemischten Stärkeestern, wobei der/die Substituent(en) des Esters verschiedenartig sein kann (können): im Esterrest RCOO- kann der Rest R ein Alkyl-, Aryl-, Alkenyl-, Alkaryl- oder Aralkylrest mit 1 bis 17 Kohlenstoffatomen, bevorzugt mit 1 bis 6 Kohlenstoffatomen, insbesondere mit ein oder zwei Kohlenstoffatomen, sein. Diese Produkte schließen die Derivate Acetat (hergestellt aus Vinylacetat oder Acetanhydrid), Propionat, Butyrat, Stearat, Phthalat, Succinat, Oleat, Maleinat, Fumarat und Benzoat ein.

Veretherungen erfolgen großteils durch Umsetzung mit Alkylenoxiden, die 2 bis 6 Kohlenstoffatome, bevorzugt 2 bis 4 Kohlenstoffatome, enthalten, insbesondere durch Verwendung von Ethylen- und Propylenoxid. Es können aber auch Methyl-, Carboxymethyl-, Cyanethyl- und carbamoylether hergestellt und verwendet werden. Weitere Produkte umfassen die Alkylhydroxyalkyl-, Alkylcarboxyalkyl-, Hydroxyalkyl-carboxymethyl- und Alkylhydroxy-alkyl-carboxymethyl-Derivate.

Neben den Estern und Ethern kann die Amylopektin-Kartoffelstärke auch in unterschiedlichem Ausmaß vernetzt sein. Die Vernetzung erfolgt vorzugsweise durch Umsetzung mit Epichlorhydrin oder 1,3-Dichlor-2-propanol, gegebenenfalls im Gemisch mit (Poly)aminen, weiters mit Phosphoroxychlorid, Natrium-trimetaphosphat, Di-oder Polyepoxiden, gemischten Anhydriden von Carbonsäuren mit di- oder tribasischen Säuren, wie beispielsweise ein gemischtes Anhydrid aus Acetanhydrid mit Adipinsäure, Aldehyden oder aldehydfreisetzenden Reagenzien, wie beispielsweise N,N'-Dimethylol-N,N'-ethylenharnstoff.

Kleister dieser vernetzten Stärke zeigen bei geringerer Vernetzung eine sehr rasch ansteigende Viskosität, die bei stärkerer Vernetzung jedoch wieder abfällt. Die Retrogradation ist aber in beiden Fällen sehr gering, weshalb sich vernetzte Amylopektin-Kartoffelstärke auch als sehr vorteilhaft für eine lange Flockenstabilität eignet. Weiters sind auch vernetzte und zusätzlich mit den zuvor beschriebenen modifizierten Amylopektin-Kartoffelstärken vorteilhafte Stärkematerialien.

Schließlich kann die Amylopektin-Kartoffelstärke auch als Pfropf-Polymer oder als Pfropf-Copolymer vorliegen, wie beispielsweise mit Produkten aus der Gruppe der Polyvinylalkohole, Acrylamide oder Monomere bzw. Polymere ausgehend von Erdölkohlenwasserstoffen. Dabei kann das Amylopektin-Kartoffelstärke-Pfropf-(Co)-Polymerisat bevorzugt als Emulsionspolymerisat vorliegen.

All die genannten Modifikationen von der Amylopektin-Kartoffelstärke können nicht nur durch Umsetzung nativer Stärke erzielt werden, auch abgebaute Formen können zum Einsatz kommen. Die Abbauvorgänge können auf mechanische, thermische, thermochemische oder enzymatische Weise erfolgen. Dadurch lässt sich die Amylopektin-Kartoffelstärke nicht nur strukturell verändern, die Stärkeprodukte können auch Kaltwasser-löslich bzw. Kaltwasser-quellbar gemacht werden.

Speziell kaltwasserlösliche abgebaute Amylopektin-Kartoffelstärke kann mit oder ohne Vorverkleisterung durch Walzentrocknung, Sprühtrocknung, u.s.w. hergestellt werden. Zur optimalen Entfaltung der Eigenschaften der kaltwasserlöslichen Stärke bzw. Stärkederivate ist der Aufschlussgrad von großer Bedeutung. Die Amylopektin-Kartoffelstärke bzw. ihre Derivate zeigen beim Aufschluss und der nachfolgenden Verwendung keine Klumpenbildung, Staubentwicklung und Entmischungsneigung und sind somit bei der praktischen Anwendung eines geeigneten Trockenproduktes auf Kleisterbasis nach dem Einrühren in Wasser optimal verarbeitbar. Ein besonderes Verfahren stellt dabei die Extrusion dar. Hier bietet sich die Möglichkeit modifizierte Amylopektin-Kartoffelstärke durch physikalische Einflüsse unterschiedlich stark abzubauen und gleichzeitig zu einem kaltwasserlöslichen bzw. kaltwasserquellbaren Produkt umzusetzen. Darüber hinaus ist mit dieser Technologie auch die direkte chemische Derivatisierung von Amylopektin-Kartoffelstärke kostensparend durchführbar.

Bei der Herstellung der Stärkederivate bewirkt die höhere Kornstabilität der Amylopektin-Kartoffelstärke im Vergleich zur herkömmlichen Kartoffelstärke eine Vereinfachung der Herstellungstechnologie. Die Reaktionen sind beispielsweise im Slurry effizienter und mit höherer Umsetzung durchführbar. Darüber hinaus ist die Amylopektin-Kartoffelstärke weniger alkali- und weniger temperaturempfindlich als die herkömmlichen Stärken. Derivatisierungsreaktionen, wie z.B. Veretherungs- oder Veresterungsreaktionen, sowie viele weitere Reaktionen, die bevorzugt zur Derivatisierung der Stärke eingesetzt werden, können dadurch bei kürzeren Reaktionszeiten intensiviert und der Einsatz von Verkleisterungsschutzsalzen kann deutlich herabgesetzt werden. Die Einsparung an Reaktionszeit und die deutliche Reduktion der Einsatzchemikalien äußert sich nicht nur wirtschaftlich in verminderten Herstellungskosten, sondern auch in ökologischer Hinsicht. So werden z.B. die Salzfrachten und die CSB-Belastung der Reaktionsabwässer merklich herabgesetzt.

Die erfindungsgemäße Flockungs- oder Bindemittelzusammensetzung kann weiters Sedimentationsbeschleuniger, Stabilisatoren, Dispergiermittel, Entschäumer, Weichmacher, auf nicht-Stärke-Basis beruhende Klebstoffe oder Klebstoffvorprodukte, Puffer, Salze, Konservierungsstoffe oder andere übliche Zusatzmittel, gegebenenfalls in Kombination miteinander, umfassen. Die Auswahl und Menge der genannten Zusatzmittel richtet sich in erster Linie nach der geplanten Verwendung der Flockungs- bzw. Bindemittelzusammensetzung, vor allem hinsichtlich der eingesetzten anorganischen Fasern.

Gemäß einem weiteren Aspekt betrifft die vorliegende Erfindung die Verwendung von AP-KS als Flockungs- oder Bindemittel bei der Herstellung keramischer Erzeugnisse bzw. auf die Verwendung einer erfindungsgemäßen Flockungs- oder Bindemittelzusammensetzung zur Herstellung keramischer Erzeugnisse.

Die Herstellung von keramischen Erzeugnissen erfolgt im Allgemeinen dadurch, dass eine wässrige Suspension an anorganischen Fasern hergestellt wird, zu der anschließend ein anorganisches Bindemittel, meist kolloidales Silica Sol sowie die Stärke (erfindungsgemäß eben die Amylopektin-Kartoffelstärke), die zumeist positiv-geladen vorliegt, zugesetzt wird. Je nach Produkteigenschaft können auch noch Zusatzmittel und Füllstoffe zugegeben werden. Im Allgemeinen hat die Mischung mit den Flocken einen pH von 4 bis 8. Die Abtrennung der gebildeten Flocken kann durch Ablassen der flüssigen Phase durch einen gesiebten Formkörper erfolgen. Der bei diesem Vorgang erhaltene Feuchtkuchen, allgemein als Grünkörper bezeichnet, wird zunächst getrocknet und dann nach verschiedenen thermischen Verfahren, beispielsweise Sintern, zu einer Keramik gebrannt. Ziel ist es in jedem Fall, die Stärke zu carbonisieren und somit dem keramischen Werkstoff die gewünschte Porosität zu verleihen. Eine allgemeine Beschreibung zur Herstellung von Keramiken findet sich in "Coagulation and Flocculation", herausgegeben von Bohuslav Dobias, Kapitel 11 (1993).

Der für die Herstellung keramischer Erzeugnisse notwendige Slurry besteht zumeist aus ca. 0,3 - 6 % Feststoffgehalt, wobei dieser meist wie folgt zusammengesetzt ist (die folgenden Angaben beziehen sich auf das Slurrygesamtgewicht):

Der Anteil an anorganischen Fasern liegt bei etwa 0,5 - 4 %, bevorzugt bei einer Konzentration von 0,5 bis 2 %. Zusätzlich werden auch noch organische oder anorganische Füllstoffe zugegeben, die zumeist in einer Konzentration von 0 - 3 %, bevorzugt bei 0,1 - 2 %, eingesetzt werden. Das Bindemittel wird in einer Menge < 2 %, meist < 0,5 % zugesetzt. Die Amylopektin-Kartoffelstärke liegt in einer Konzentration von 0,001 bis 0,5 %, bevorzugt bei 0,01 bis 0,3 %, vor. Darüber hinaus können auch noch bis zu 1 % an Zusatzmittel wie beispielsweise Sedimentationsbeschleuniger, Dispergiermittel, Entschäumer, Weichmacher u.a.m. zugesetzt werden, sofern diese Zusätze den Vorgang der Flockung nicht negativ beeinflussen. Die große restliche Menge im Slurry ist Wasser.

Für die Qualität und den Anspruch des keramischen Erzeugnisses ist die eingesetzte anorganische Faser von großer Bedeutung. Die verwendeten Fasern bestehen zumeist aus Aluminiumsilikaten und werden im Handel unter den verschiedenen Markennamen verkauft. Bekannte Produktgruppen sind beispielsweise die Fasern Fiberfrax (Fa. Unifrax), Kaowool (Thermal Ceramics) oder Maxsil (McAllister). Vor allem aber auch für den Hochtemperaturbereich finden Fasern aus Zirkonium, Magnesium, Calcium, Yttrium, Titan und anderer Metalle bzw. Oxide besondere Verwendung. Darüber hinaus werden u.a. aber auch Whiskers oder Tabularoxide verwendet.

Für die Herstellung der keramischen Erzeugnisse können auch Füllstoffe zugesetzt werden. Bei diesen Stoffen handelt es sich bevorzugt um Oxide von Aluminium bzw. Aluminiumsilikaten, aber auch um Kreide. Darüber hinaus kommen aber auch organische Fasern, wie beispielsweise Cellulosen oder Polyethylen zur Anwendung.

Der eigentliche Flockungsprozess wird dann erfindungsgemäß durch die Zugabe der Amylopektin-Kartoffelstärke bzw. eines seiner Derivate erzielt.

Demgemäß betrifft die vorliegender Erfindung auch die Verwendung eines Slurry zur Herstellung keramischer Erzeugnisse, welcher sich dadurch auszeichnet, dass er ein erfindungsgemäßes Flockungs- oder Bindemittel umfasst.

Bevorzugterweise wird mit der Erfindung ein Slurry verwendet, der einen AP-KS in einer Konzentration von 0,001 bis 0,5 Gew.-% umfasst.

Bevorzugterweise umfasst der erfindungsgemäß verwendete Slurry weiters
- anorganische Fasern, insbesondere Fasern auf Basis von Aluminiumsilikaten,
- Füllstoffe, insbesondere Oxide von Aluminium oder Aluminiumsilikaten oder Kreide,
- organische Materialien, insbesondere organische Fasern aus Cellulosen oder Polyethylen,
- anorganische Bindemittel, insbesondere kolloidales Silika,
oder Mischungen dieser Inhaltsstoffe sowie weitere übliche Zusätze.

Gemäß einem weiteren Aspekt betrifft die vorliegende Erfindung auch ein Verfahren zur Herstellung von keramischen Erzeugnissen, welches die folgenden Schritte umfasst:
- Herstellung eines erfindungsgemäßen Slurry, und
- thermisches Behandeln bei einer Temperatur von über 300°C, insbesondere über 500°C.

Damit der Flockungsprozess auch optimal verläuft ist eine gute Verteilung der Fasern und der Füllstoffe notwendig. Die Zugabe der Amylopektin-Kartoffelstärke kann in der Regel auf drei verschiedene Arten erfolgen. Wird eine Kochstärke zugesetzt, so muss der Slurry zum Sieden erhitzt werden, damit der Flockungsprozess eingeleitet werden kann. Erst durch die Hitze wird die Stärke verkleistert und somit in den wasserlöslichen Zustand gebracht. Alternativ dazu kann ein kaltwasserlösliches Derivat pulverförmig in das System eingebracht werden, wobei unter moderatem Rühren die Amylopektin-Kartoffelstärke klumpenfrei in Lösung tritt. Als dritte Möglichkeit bietet sich an, einen konzentrierten Stärkekleister vorher anzusetzen und diesen dem Slurry zuzugeben.

Es hat sich gezeigt, dass die Amylopektin-Kartoffelstärke, im speziellen Fall die kationische kaltwasserlösliche Amylopektin-Kartoffelstärke, pulverförmig sehr rasch und vor allem klumpenfrei und vollständig gelöst eingerührt werden kann, was sich speziell im Rahmen der vorliegenden Erfindung als äußerst vorteilhaft erwiesen hat. Insbesondere die Lösedynamik der Amylopektin-Kartoffelstärke sowie die Flockenbildungsgeschwindigkeit konnten gegenüber Derivaten herkömmlicher Stärken deutlich verbessert werden. Aber auch die Kapazität konnte deutlich erhöht werden. Agglomerationen oder Klumpenbildungen, wie sie bei herkömmlichen kationischen Stärken immer wieder auftreten, werden bei der Anwendung der Amylopektin-Kartoffelstärke nicht beobachtet. Dadurch ist auch ein eventuelles Vorlösen modifizierter Stärke nicht unbedingt notwendig, wodurch Zeit und apparativer Aufwand gespart werden können. Darüber hinaus zeigte sich, gleichwohl wie die Amylopektin-Kartoffelstärke in das System eingebracht wurde, dass die gebildeten Flocken überaus gleichmäßig sind und vor allem bei längerer Verarbeitungsdauer eine deutlich verbesserte Stabilität aufweisen. Selbst durch die kontinuierliche Rührung bei höheren Drehzahlen im Reaktionsbehälter weisen die gebildeten Flocken eine überraschend exzellente Scherstabilität auf. Durch die Verwendung der Amylopektin-Kartoffelstärke werden auch die anorganischen Fasern besser benetzt und sind fluider. Aufgrund natürlich chemisch gebundener Phosphatgruppen hat die Amylopektin-Kartoffelstärke zusätzlich spezifische Polyelektrolyteigenschaften, wodurch die Fixierung des nachfolgend eingebrachten Bindemittels auf der Faser deutlich erhöht wird. Auch lässt sich das Mengenverhältnis zwischen dem Bindemittel und der Amylopektin-Kartoffelstärke besser regulieren.

Ein weiterer bedeutender Faktor ist die Klarheit der Amylopektin-Kartoffelstärkekleister, die deutlich höher ist. Vergleichsmessungen mit herkömmlichen kationischen Stärkeprodukten durch Messung der Lichtdurchlässigkeit an einem konventionellen Spectraÿ photometer zeigten deutliche Vorteile. Darüber hinaus weisen die Kleister der Amylopektin-Kartoffelstärke-Derivate geringere Neigungen zur Retrogradation und sind auch über einen längeren Zeitraum viskostabil. Diesbezügliche Vergleichsmessungen sind im experimentellen Teil zusammengestellt.

Um ein keramisches Produkt optimal herstellen zu können, ist auch die Zugabe eines anorganischen Bindemittels vorteilhaft. In den meisten Fällen wird als anorganisches Bindemittel kolloidales Silika, allgemein als Silica Sol bezeichnend, verwendet. Silica. Sole sind üblicherweise 30 - 60%ig wässrige Lösungen, wobei die Trübe der Lösungen sich nach der Teilchengröße der SiO₂-Partikel orientiert. Silica Sol wird meist in einer breiten Partikelgrößenverteilung angewendet, wobei die Teilchengröße vom herzustellenden keramischen Endprodukt stark abhängt. Im Handel werden die Silica Sole unter den verschiedenen Markennamen verkauft. Bekannte Produktgruppen sind beispielsweise das Megasol (Fa. Wesbond Corporation) oder das Ludox (DuPont Corporation). Das Silica Sol wird üblicherweise im Verhältnis 3:1 bis 2:1 zur Stärke eingesetzt. Durch die Verwendung der Amylopektin-Kartoffelstärke lässt sich ihre Mengen gegenüber herkömmlichen Stärken reduzieren, wodurch das keramische Endprodukt sich mit höherer Festigkeit und geringerem Schrumpfen herstellen lässt. Zusätzlich wird durch die Verwendung von Amylopektin-Kartoffelstärke ein eventuelles Koagulieren des Silica Sols verhindert. Alternativ oder in Kombination dazu können aber auch statt dem Silica Sol Bindemittel, wie Polyvinylalkohol, Polyvinylacetat oder natürliche bzw. synthetische Wachse verwendet werden.

Es gibt verschiedene Arbeitstechniken, wie beispielsweise das "tape casting", das "slip casting" oder die "kolloidale filtration", um nur einige Beispiele zu nennen, um die Flocken aus dem System zu entfernen. Meist werden die gebildeten Flocken durch Filtration oder durch Absaugen, in dem Druck angelegt wird, in eine Form gebracht. Durch die Verwendung der Amylopektin-Kartoffelstärke konnte vorzugsweise eine optimale Orientierung der Fasern erzielt werden, was wiederum für die Qualität des keramischen Erzeugnisses äußerst günstig ist. Das Filtrat selber ist klar und frei von Trübstoffen. Es enthält keine Stärkereste, so dass dieses Wasser ohne Bedenken im Produktionskreislauf wiederholt genutzt werden kann. Der somit hergestellte Feuchtkuchen (Grünkörper) wird zunächst meist bei ca. 120°C getrocknet. Anschließend wir der Grünkörper durch Feuerung in eine keramisches Produkt überführt. Dieser Vorgang erfolgt prinzipiell durch langsames und stufenweises Erhitzen, damit die Keramik nicht zerstört wird.

Durch die Verwendung der Amylopektin-Kartoffelstärke kann garantiert werden, dass die Carbonisierung rückstandsfrei erfolgt, d.h. es werden keine toxischen oder umweltschädigende Stoffe freigesetzt. Darüber hinaus wird durch die Verwendung der Amylopektin-Kartoffelstärke eine besonders stabile dreidimensionale Struktur gebildet, was sich auch in den gemessenen Festigkeiten widerspiegelte. Dadurch, dass die Amylopektin-Kartoffelstärke eine exzellente Löslichkeit aufweist und sich somit im Flockungsprozess keine agglomerierten Teilchen bildeten, können sich bei der Feuerung im keramischen Werkstoff auch keine unerwünschten Hohlräume bilden. Diese Hohlräume würden sonst durch das Silika eingenommen werden, wodurch wiederum die Festigkeit der Keramik deutlich reduziert wird. Die Amylopektin-Kartoffelstärke wirkt insbesondere auch als Porositätskontrolle. Aufgrund ihres großen hydrodynamischen Volumens kann sich die Stärke besser entfalten und wechselwirken. Die Porosität lässt sich durch variable Einsatzmengen leicht kontrollieren, wodurch keramische Erzeugnisse mit abgestuften Produkteigenschaften produziert werden können.

Im Rahmen des erfindungsgemäßen Verfahrens wird der Slurry bevorzugterweise durch
- Bereitstellen einer wässerigen Suspension an anorganischen Fasern, und
- Zusetzen eines anorganischen Bindemittels, insbesondere Silica Sol, und eines erfindungsgemäßen Flockungs- und Bindemittel, sowie gegebenenfalls weiterer Zusatzmittel und Füllstoffe,
hergestellt.

Vorteilhafterweise ist auch vor dem thermischen Behandlungsschritt ein Trocknungsschritt vorgesehen, wobei der Trocknungsschritt bevorzugterweise bei 100 bis 200°C, insbesondere bei etwa 120 bis 140°C, erfolgen soll.

Der thermische Behandlungsschritt umfasst bevorzugterweise einen Sinterungsschritt. Bevorzugte Temperaturen, die während des thermischen Behandlungsschrittes als Maximaltemperatur angewendet werden, liegen im Bereich von 800 bis 2500°C, vorzugsweise von 1500 bis 2000°C, insbesondere bei etwa 1800°C, was vor allem durch die Natur der anorganischen Fasern bzw. durch die Anforderungen an das herzustellende keramische Produkt bedingt wird.

Gegebenenfalls erfolgt vor dem thermischen Behandlungsschritt und gegebenenfalls vor dem Trocknungsschritt eine mechanische Entfernung des Wassers. Ebenfalls bevorzugt ist, dass vor dem thermischen Behandlungsschritt ein Formungsschritt vorgesehen wird, wobei der Slurry bzw. der Grünkörper in eine entsprechende Form in an sich bekannter Weise eingebracht wird.

Alternativ zur direkten Carbonisierung der Amylopektin-Kartoffelstärke gibt es die Möglichkeit keramisch verstärkte Produkte herzustellen. Dabei werden die hergestellten Grünkörper aus Faser und Binde- und Flockungsmittel während des Formens mit flüssigem Metall bzw. Metalllegierungen penetriert, wobei die dreidimensionale Struktur (Matrix) nicht zerstört wird. Bei diesem Vorgang wird die Stärke herausgebrannt und letztendlich bekommt man ein faserverstärktes Produkt. Durch die Verwendung von Amylopektin-Kartoffelstärke kann das Ausmaß der Porosität deutlich erhöht und auch die Verteilung noch besser kontrolliert werden. Darüber hinaus wirkt die Stärke auch optimal als Bindemittel zwischen den gemischten Fasern bzw. Metallen, wodurch die Stabilität noch zusätzlich vergrößert wird.

Daher wird in erfindungsgemäß bevorzugter Weise der thermische Behandlungsschritt durch eine Penetration von flüssigen Metallen oder flüssigen Metalllegierungen realisiert.

Keramische Produkte, die durch die erfindungsgemäße Verwendung der AP-KS hergestellt worden sind, zeichnen sich vor allem durch ihre hohe Härte, große chemische und thermische Beständigkeit, ihre exzellente korrosionsbeständigen Eigenschaften, ihre besondere Wärmeleitfähigkeit und ihre insgesamt exzellente Gesamtporosität aus.

Demgemäß betrifft die vorliegende Erfindung in einem weiteren Aspekt auch keramische Erzeugnisse, die mit dem erfindungsgemäßen Herstellungsverfahren, also unter Verwendung von AP-KS, erhältlich sind und eine Dichte von 410 kg/m³ aufweisen.

Die Erfindung wird anhand der nachfolgenden Beispiele sowie der Zeichnungsfiguren, auf die sie jedoch nicht eingeschränkt sein soll, näher erläutert.

Es zeigen:
- Fig. 1:: die Viskositätsentwicklung verschiedener Stärken, und
- Fig. 2:: den Vergleich von Amylopektin-Kartoffelstärke mit einer durch Fraktionierung hergestellten amylopektinreichen Kartoffelstärke.

### Beispiele:

### Beispiel 1: Herstellung kationischer Amylopektin-Kartoffelstärke

Native Amylopektin-Kartoffelstärke wird zu einem 40 % Slurry angerührt. Nach Zugabe von Natriumsulfat wird mittels 3 %iger Natronlauge ein pH von ca. 11,5 eingestellt. Durch Zugabe von 2,3-Epoxypropyltrimethyl-ammoniumchlorid wird die Kationisierung gestartet. Nach 18 Stunden bei 34°C wird die Reaktion durch Neutralisation des Slurries abgebrochen. Die kationische Stärke wurde mit Wasser gewaschen und schonend getrocknet.

Der Auswaschgrad der kationischen Amylopektin-Kartoffelstärke muss sehr hoch sein, denn dann ist auch gewährleistet, dass das Produkt nur geringe Mengen an Alkali- und Erdalkalispuren aufweist. Es ist bekannt, dass die Elemente Natrium, Kalium, Calcium und Magnesium, aber auch Eisen und Mangan, bei der Carbonisierung des keramischen Werkstückes ein verstärktes Schwinden bewirken. Dieser Effekt ist insbesondere bei hochtemperaturbeständigen Keramiken ein Problem. Für die Auswaschung der kationischen Amylopektin-Kartoffelstärke sollte daher folgender Qualitätsanspruch gelten:

| | | | |
|---|---|---|---|
| Natrium: | < 0,1 % | Calcium: | < 0,01 % |
| Kalium: | < 0,01 % | Magnesium: | < 0,01 % |

Durch die Verwendung der Amylopektin-Kartoffelstärke konnte die Entfernung der Salzfrachten im Vergleich zu Derivaten herkömmlicher Stärken rasch und unter Verwendung geringerer Wassermengen erzielt werden.

### Beispiel 2: Herstellung einer Amylopektin-Kartoffelstärkesulfamats

Zu einem 40 %igen Slurry aus Amylopektin-Kartoffelstärke werden 10 % Ammoniumsulfamat (bezogen auf Stärke) zugesetzt. Durch Verkleistern der Stärke wird die Reaktionsmischung umgesetzt. Das Kleisterprodukt wird anschließend walzengetrocknet.

### Beispiel 3: varianten zur Herstellung kaltwasserlöslicher Amylopektin-Kartoffelstärken

Die Herstellung einer kaltwasserlöslichen derivatisierten Amylopektin-Kartoffelstärke kann auf verschiedene Arten erreicht werden. Beispielhaft sind zwei charakteristische Verfahrensvarianten angegeben.

### A) Walzentrocknung

Je nach gewünschter Qualität und Viskosität des kaltwasserlöslichen Endproduktes bieten sich bei diesem Verfahren zwei Varianten an. Entweder wird der Slurry der kationischen Stärke direkt an der Walze getrocknet, oder aber die Stärke wird zunächst verkleistert und dann erst walzengetrocknet. Beide Produkte sind schuppenförmig

### B) Extrusion

Durch dieses Verfahren wird die derivatisierte Stärke in Gegenwart von wenig Wasser, die Trockensubstanz der Reaktionsmischung im Extruder liegt meist bei 70 - 90 %, unter dem Einfluss von mechanischen Kräften und Temperatur zu einem kaltwasserlöslichen Produkt umgewandelt. Die erhaltene Stärke liegt als Granulat vor.

### Beispiel 4: Viskositätsentwicklung:

Die Viskositätsentwicklung ist eine Versuchsanordnung, wo die Lösegeschwindigkeit einer kationischen kaltwasserlöslichen Stärke beschrieben wird.

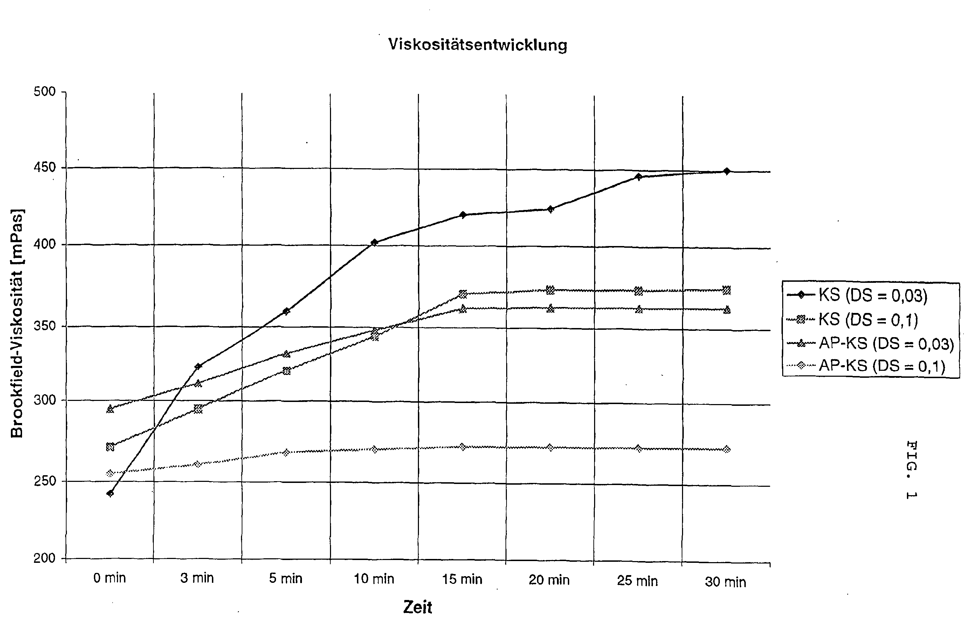

Dazu wurden kationische Stärken 4,5 %ig 3 min bei 1000 Upm eingerührt. Das Ergebnis ist in Fig. 1 dargestellt.

Die Kurvenverläufe zeigen deutlich, dass die Derivate der Amylopektin-Kartoffelstärke deutlich rascher ihre Viskositätsentwicklung abschließt als Produkte herkömmlicher Kartoffelstärke. Insbesondere zeigten die Versuche auch, dass schon bei einem geringen Substitutionsgrad von 0,03 die Amylopektin-Kartoffelstärke der herkömmlichen Kartoffelstärke deutlich überlegen und dieser Vorteil von der herkömmlichen Kartoffelstärke erst durch höhere Stickstoff-Substitution wettgemacht werden kann.

### Beispiel 5: Strukturanalytik der Amylopektin-Kartoffelstärke

Zur Charakterisierung der Amylopektin-Kartoffelstärke wurde einerseits das mittlere Molekulargewicht und andererseits die Molmassenverteilung ermittelt. Beide Analysenverfahren sind in der Literatur hinlänglich beschrieben, wie beispielsweise von Chi-san Wu im Handbook of Size Exclusion Chromatography; Chromatographic science series, Vol. 69 (1995), Marcel Dekker Inc., New York.

Zu deutlicheren Charakterisierung der Amylopektin-Kartoffelstärke wurde vergleichend das Amylopektin einer herkömmlichen Kartoffelstärke durch Anreicherung gewonnen. Für diesen Verfahrensschritt gibt es eine Reihe von Methoden, wobei für die vorliegende Untersuchung eine Fraktionierung nach der von J. Potze beschriebenen Methode in "Starch Production Technology", Chapter 14, Seite 257 - 271 durchgeführt wurde. Bei diesem Verfahren wird die Stärke auf 155°C erhitzt und das Amylopektin selektiv mit Magnesiumsulfat ausgefällt.

Für die vergleichende Darstellung des mittleren Molekulargewichtes wurden auch die Messwerte von zwei herkömmlichen Stärken, der Wachsmaisstärke und der herkömmlichen Kartoffelstärke, bestimmt.

**Tabelle 1: Vergleichende Darstellung von verschiedenen Kochstärken**

| | **AP-KS** | **KS** | **WMS** | **FAP-KS** |
|---|---|---|---|---|
| **mittleres Molekulargewicht** | **190.10**^{**6**} | **48.10**^{**6**} | **64.10**^{**6**} | **43.10**^{**6**} |

| | | | | |
|---|---|---|---|---|
| KS = Kartoffelstärke AP-KS = Amylopektin-Kartoffelstärke WMS = Wachsmaisstärke FAP-KS = durch Fraktionierung gewonnene amylopektinreiche Kartoffelstärke | | | | |

Der Vergleich macht deutlich, dass sich die Amylopektin-Kartoffelstärke (AP-KS) deutlich von den anderen Stärken abgrenzt. Der Unterschied der Amylopektin-Kartoffelstärke zu der durch chemische/physikalische Verfahren hergestellten fraktionierten Amylopektin-Kartoffelstärke (FAP-KS) zeigt sich ganz erheblich.

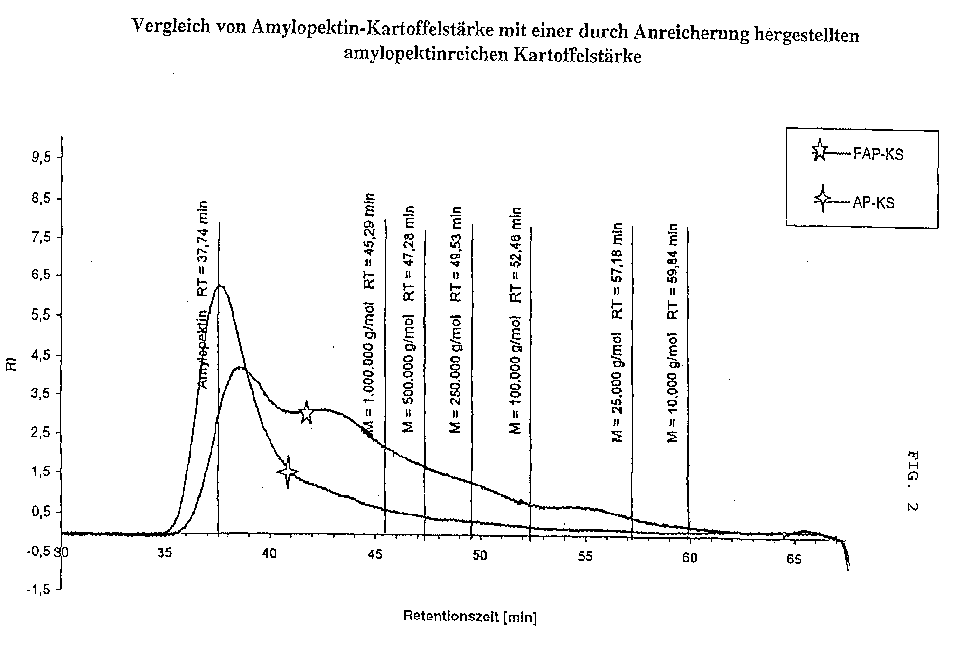

Zur deutlicheren Charakterisierung der Unterschiede zwischen Amylopektin-Kartoffelstärke (AP-KS) und fraktionierter Amylopektin-Kartoffelstärke (FAP-KS) wurde auch die Molmassenverteilung mittels Size Exclusion Chromatography ermittelt. Darüber hinaus wurde auch das Flächenverhältnis der gemessenen Verteilung charakterisiert (siehe Fig. 2).

| **Retentionszeit** | **AP-KS** | **FAP-KS** |
|---|---|---|
| **> 41 min** | **69,00%** | **34 %** |
| **< 41 min** | **31,00%** | **66 %** |

Während die Amylopektin-Kartoffelstärke (AP-KS) eine deutlich einheitliche Molekularverteilung aufweist, zeigt die fraktionierte Amylopektin-Kartoffelstärke ein bedeutend unklareres Bild Charakteristisch ist vor allem der Anteil der Molmassen bei einer Retentionszeit > 41 min. Dieser ist bei der Amylopektin-Kartoffelstärke mehr als doppelt so groß als bei der fraktionierten Amylopektin-Kartoffelstärke. Durch den Trennungsprozess der Fraktionierung wurde die Stärke abgebaut, wodurch sich auch die Eigenschaften der Produkte änderten.

### Beispiel 6: Vergleichende analytische Charakterisierung der Amylopektin-Kartoffelstärke (AP-KS) zu Wachsmaisstärke (WMS), Maisstärke (MS) und herkömmlicher Kartoffelstärke (KS)

Die in der folgenden Tabelle angegebenen Werte wurden aus "Starch - Chemistry and Technology" von Roy L. Whistler et al, (1965), Academic Press, entnommen und durch eigene Erfahrungswerte ergänzt.

| | **MS** | **KS** | **WMS** | **AP-KS** |
|---|---|---|---|---|
| **% Amylose** | **26 - 31** | **23 - 27** | **< 2** | **< 2** |
| **% Lipid** | **0,5 - 0,9** | **0 - 0,1** | **0,5 - 0,9** | **0 - 0,1** |
| **% Protein** | **0,2 - 0,4** | **0,05 - 0,2** | **0,1 - 0,35** | **0,05 - 0,2** |
| **% Phosphor** | **0,01 - 0,02** | **0,04 - 0,13*** | **0 - 0,02** | **0,04 - 0,15*** |

| | | | | |
|---|---|---|---|---|
| *... definiert als Phosphatmonoester | | | | |

Die vergleichende Darstellung einiger spezifischer analytischer Daten zeigt deutlich die Unterschiede der Amylopektin-Kartoffelstärke (AP-KS) zu den drei herkömmlichen Stärken. Im Unterschied zur Wachsmaisstärke und Maisstärke enthält die Amylopektin-Kartoffelstärke geringere Mengen an Lipiden und Proteinen, hingegen ist der hohe Anteil an natürlich gebundenen Phosphat sehr typisch. Der Unterschied zur herkömmlichen Kartoffelstärke spiegelt sich im Amylosegehalt wider. Dadurch, dass die Amylopektin-Kartoffelstärke bis zu 100 % Amylopektin enthält ist beispielsweise die Viskosität oder auch das Trübungsverhalten von Kleistern stark unterschiedlich. So konnte festgestellt werden, dass die Amylopektin-Kartoffelstärke auch über einen längeren Zeitpunkt eine konstante Kleisterklarheit hat, während die herkömmlichen Stärken eine deutliche Trübung aufwiesen. Geradezu im großtechnischen Bereich ist die Stabilität von Stärke bzw. Stärkederivate für die Qualität der Flockung bzw. der Herstellung des Grünkörpers relevant.

### Beispiel 7: Löseverhalten von Stärkesulfamaten und kationischen Stärken

Ein wichtiges Charakteristikum kaltwasserlöslicher Stärken ist sein Löseverhalten. Für die Herstellung keramischer Produkte ist eine uneingeschränkte Forderung nach vollständiger Löslichkeit, ohne dass beispielsweise Agglomerationen oder Klumpenbildung auftritt. Um die Löslichkeit von kaltwasserlöslicher derivatisierter Stärke überprüfen zu können, wurde folgende Versuchsanordnung gewählt, die der Praxis sehr ähnlich ist.

In einem Behälter wurden unter Rühren bei 700 Üpm 15 1 Wasser vorgelegt und 15 g Stärke werden innerhalb weniger Sekunden rasch zugegeben. Der Kleister wird 3 min unter den gegebenen Bedingungen bei RT gerührt und anschließend über ein 800 µm Sieb rasch filtriert. Zur Bewertung der Löslichkeit wurden Kleisterreste am Rührer und der Siebrückstand subjektiv bewertet. Folgende Ergebnisse wurden gefunden:

**Tabelle 2:**

| **Kationische Stärken** | | | | |
|---|---|---|---|---|
| | **Herst.-Verfahren*** | **DS**** | **Siebrückstand** | **Kleister am Rührer** |
| kommerzielle KS | WATRO | 0,03 | +/- | +/- |
| kommerzielle KS | WATRO | 0,1 | +/- | - |
| AP-KS | WATRO | 0,03 | + | + |
| AP-KS | WATRO | 0,1 | + | + |
| WMS | WATRO | 0,03 | - | +/- |
| WMS | WATRO | 0,1 | - | +/- |
| FAP-KS | WATRO | 0,03 | +/- | +/- |
| FAP-KS | WATRO | 0,1 | +/- | - |
| KS | extrudiert | 0,03 | +/- | +/- |
| KS | extrudiert | 0,1 | +/- | - |
| AP-KS | extrudiert | 0,03 | + | + |
| AP-KS | extrudiert | 0,1 | + | + |

| **Stärke-Sulfamate** | | | | |
|---|---|---|---|---|
| | **Herst.-Verfahren*** | | **Siebrückstand** | **Kleister am Rührer** |
| Kommerzielle KS | WATRO | | +/- | +/- |
| AP-KS | WATRO | | + | + |
| WMS | WATRO | | - | +/- |
| FAP-KS | WATRO | | +/- | - |

| | | | | |
|---|---|---|---|---|
| *... Bezeichnung des verwendeten Verfahrens zur Herstellung des kaltwasserlöslichen Stärkederivates, siehe Beispiel 3. **.. Substitutionsgrad (DS) KS = Kartoffelstärke AP-KS = Amylopektin-Kartoffelstärke WMS = Wachsmaisstärke FAP-KS = durch chemisch/physikalische Verfahren gewonnene amylopektinreiche Kartoffelstärke | | | | |

### Erläuterung zur Tabelle:

- +: keine Kleisterreste an der Rührwelle bzw. kein Siebrückstand
- +/-: Rührwelle leicht verkleistert bzw. Sieb weist Kleisterfilm bzw. geringe Agglomerate auf.
- -: Rührwelle stark verkleistert bzw. Sieb weist viele Agglomerate und Klumpen auf

Die Löseversuche zeigten deutlich, dass die Derivate der Amylopektin-Kartoffelstärke eine bei weitem bessere Löslichkeit aufweisen als herkömmliche Derivate der Kartoffelstärke, der Wachsmaistärke oder der durch Anreicherung gewonnenen fraktionierten Amylopektin-Kartoffelstärke. In Vergleichstudien zeigte sich auch, dass die kationischen Produkte der Amylopektin-Kartoffelstärke den herkömmlichen kommerziellen Produkten deutlich überlegen sind, was wiederum in der Herstellung keramischer Erzeugnisse von großem Vorteil ist.

### Beispiel 8: Herstellung einer Keramik:

Zu einem Slurry aus 210 g Aluminiumsilikatfaser der Marke Kaowool und 25 1 Wasser werden 90 g eines Füllstoffs, beispielsweise Mullit, zugegeben. Anschließend werden 13 g einer kaltwasserlöslichen kationischen Amylopektin-Kartoffelstärke (DS=0,03) eingebracht. In kurzer Zeit ist die Stärke gelöst und im System optimal verteilt. Durch den Zusatz dieser Stärke konnte eine optimale Flockengröße und Flockenverteilung erzielt werden. Dann werden 96 g eines handelsüblichen 40%igen Silica Sols zugegeben, kurz gerührt und anschließend die Flockenmasse über eine Siebform unter Anlegen eines Vakuums abgesaugt. Der Formkörper wird bei ca. 120°C getrocknet und bei etwa 1800°C gebrannt.

Zur Verdeutlichung der Vorteile in der Verwendung der Amylopektin-Kartoffelstärke wurden Vergleichsversuche mit herkömmlichen kaltwasserlöslichen kationischen Stärken durchgeführt. Im Rahmen der Versuche wurde die Flockungszeit, die Trübe des im Kreislauf befindlichen Wassers nach 20 Durchgängen sowie die physikalischen Parameter des keramischen Endproduktes bestimmt.

**Tabelle 3:**

| | KS ** | WMS | AP-KS | FAP-KS |
|---|---|---|---|---|
| **Messungen während der Herstellung** | | | | |
| Flockungszeit | 3 min | 3,5 min | 2 min | 3 min |
| Trübe * | 19 NTU | 12 NTU | 4 NTU | 11 NTU |

| **Analytik der keramischen Endprodukte** | | | | |
|---|---|---|---|---|
| Dichte | 350 m³/kg | 372 m³/kg | 410 m³/kg | 347 m³/kg |
| Schwinden | 2,0% | 2,4% | 0,9% | 1,9% |

| | | | | |
|---|---|---|---|---|
| *... Die Trübe, verursacht durch die Gegenwart ungelöster Substanzen wurde nach der DIN EN 27027 bestimmt. Die Messungen erfolgten mittels Fa. Lange LTP 5 Turbidimeter, die Kalibrierung wurde mit Formazin-Standardsuspensionen durchgeführt, die Angabe der Ergebnisse erfolgte in FTU (Formazine Turbidity Units). **... Die hier eingesetzte kationische Kartoffelstärke entspricht kommerziellen Produkten, so wie sie zum Beispiel in der Patentanmeldung PCT WO 99/15322 beschrieben werden. | | | | |

Die Messungen mit der Amylopektin-Kartoffelstärke ergaben deutlich geringere Flockungszeiten als bei den herkömmlichen Stärken, darüber hinaus war auch die Flockenstabilität bedeutend größer. Letzteres wird insbesondere durch das klare Reaktionswasser aufgezeigt, das auch nach 20 Produktionsläufen noch immer klar und frei von Trübstoffen ist. Die bessere Verarbeitbarkeit der keramischen Produkte, die durch Anwendung der Amylopektin-Kartoffelstärke erzielt wurden, wird in der Analytik der Endprodukte ersichtlich. Die Dichte der Produkte war unter Verwendung der Amylopektin-Kartoffelstärke deutlich größer, das Schwinden des dreidimensionalen Körpers deutlich reduziert.

## Patentansprüche

1. Verwendung einer Flockungs- oder Bindemittelzusammensetzung für die Herstellung keramischer Erzeugnisse, **dadurch gekennzeichnet, dass** die Zusammensetzung Amylopektin-Kartoffelstärke (AP-KS) umfasst.

2. Verwendung nach Anspruch 1, **dadurch gekennzeichnet, dass** die AP-KS eine modifizierte, insbesondere eine kationisch modifizierte, AP-KS ist.

3. Verwendung nach Anspruch 1 oder 2, **dadurch gekennzeichnet, dass** die AP-KS mit stickstoffhältigen Gruppen, insbesondere mit elektropositiv geladenen quartären Ammoniumgruppen, modifiziert ist.

4. Verwendung nach einem der Ansprüche 1 bis 3, **dadurch gekennzeichnet, dass** die AP-KS ein AP-KS-Sulfamat ist.

5. Verwendung nach einem der Ansprüche bis 4, **dadurch gekennzeichnet, dass** die AP-KS aus einer Kartoffel gewonnen wurde, die zum Zweck der Amyloseinhibierung durch Züchtung oder molekularbiologische bzw. gentechnische Methoden verändert wurde.

6. Verwendung nach einem der Ansprüche 1 bis 5, **dadurch gekennzeichnet, dass** die AP-KS aus einer Kartoffel gewonnen wurde, die durch antisense-Inhibition eines GBSS-Gens hinsichtlich der Amylosebildung inhibiert wurde.

7. Verwendung nach einem der Ansprüche 1 bis 6, **dadurch gekennzeichnet, dass** die AP-KS aus einer Kartoffel gewonnen wurde, die durch Cosuppression hinsichtlich der Amylosebildung inhibiert wurde.

8. Verwendung nach einem der Ansprüche 1 bis 7, **dadurch gekennzeichnet, dass** die AP-KS einen Amylopektingehalt von mindestens 95 %, vorzugsweise von mindestens 98 %, hat.

9. Verwendung nach einem der Ansprüche 1 bis 8, **dadurch gekennzeichnet, dass** die AP-KS als Quellstärke enthalten ist.

10. Verwendung nach einem der Ansprüche 1 bis 9, **dadurch gekennzeichnet, dass** die AP-KS bei 25°C zumindest zu 90 %, bevorzugt zu 95 %, insbesondere zu mehr als 99 %, in Wasser löslich ist.

11. Verwendung nach einem der Ansprüche 1 bis 10, **dadurch gekennzeichnet, dass** die AP-KS physikalisch, insbesondere durch thermische und/oder mechanische Verfahren abgebaut ist.

12. Verwendung nach einem der Ansprüche 1 bis 11, **dadurch gekennzeichnet, dass** die AP-KS chemisch, insbesondere durch thermochemische, oxidative oder saure Verfahren abgebaut ist.

13. Verwendung nach einem der Ansprüche 1 bis 12, **dadurch gekennzeichnet, dass** die AP-KS in veretherter Form enthalten ist.

14. Verwendung nach einem der Ansprüche 1 bis 13, **dadurch gekennzeichnet, dass** die AP-KS als Methyl-, Ethyl-, Hydroxyethyl-, Hydroxypropyl-, Hydroxybutyl-, Carboxymethyl-, Cyanoethyl- oder Carbamoylether enthalten ist.

15. Verwendung nach einem der Ansprüche 1 bis 14, **dadurch gekennzeichnet, dass** die AP-KS in veresterter Form enthalten ist.

16. Verwendung nach einem der Ansprüche 1 bis 15, **dadurch gekennzeichnet, dass** darin eine veresterte AP-KS enthalten ist, in deren Esterrest RCOO- der Rest R ein Alkyl-, Aryl-, Alkenyl-, Alkaryl- oder Aralkylrest mit 1 bis 17 Kohlenstoffatomen, bevorzugt mit 1 bis 6 Kohlenstoffatomen, insbesonders mit ein oder zwei Kohlenstoffatomen ist.

17. Verwendung nach einem der Ansprüche 1 bis 16, **dadurch gekennzeichnet, dass** die AP-KS als Essigsäure-, Propionsäure-, Buttersäure-, Stearinsäure-, Phthalsäure-, Bernsteinsäure-, Ölsäure-, Maleinsäure-, Fumarsäure- oder Benzoesäureester enthalten ist.

18. Verwendung nach einem der Ansprüche 1 bis 17, **dadurch gekennzeichnet, dass** die AP-KS in vernetzter Form enthalten ist.

19. Verwendung nach einem der Ansprüche 1 bis 18, **dadurch gekennzeichnet, dass** die AP-KS mit Epichlorhydrin oder 1,3-Dichlor-2-propanol, gegebenenfalls im Gemisch mit (Poly)aminen, vernetzt ist.

20. Verwendung nach einem der Ansprüche 1 bis 19, **dadurch gekennzeichnet, dass** die AP-KS durch Umsetzung mit aldehydfreisetzenden Reagenzien, wie N,N'-Dimethylol-N,N'-ethylenharnstoff, mit Phosphoroxychlorid, Natriumtrimetaphosphat, Di- oder Polyepoxiden, gemischten Anhydriden von Carbonsäuren mit di- oder tri-basischen Säuren, wie Adipinsäure/ Ac₂O, Glyoxal oder Aldehyden, wie Form-, Acet- oder Propionaldehyd vernetzt ist.

21. Verwendung nach einem der Ansprüche 1 bis 20, **dadurch gekennzeichnet, dass** die AP-KS durch kationische und/oder anionische Gruppen modifiziert ist.

22. Verwendung nach einem der Ansprüche 1 bis 21, **dadurch gekennzeichnet, dass** die AP-KS als Stärke-Pfropfpolymerisat oder Stärke-Pfropf-Copolymerisat vorliegt.

23. Verwendung nach einem der Ansprüche 1 bis 22, **dadurch gekennzeichnet, dass** das AP-KS-Pfropf-(Co)-Polymerisat als Emulsionspolymerisat vorliegt.

24. Verwendung nach einem der Ansprüche 1 bis 23, **dadurch gekennzeichnet, dass** die AP-KS einen Substitutionsgrad von 0,00001 bis 3, vorzugsweise von 0,001 bis 2, insbesondere von 0,005 bis 1, hat.

25. Flockungs- oder Bindemittelzusammensetzung nach einem der Ansprüche 1 bis 24, **dadurch gekennzeichnet, dass** die AP-KS durch anorganische und/oder organische, vorzugsweise verschiedenwertige, insbesondere zweiwertige, Säuren und/oder Salze, Ester und/ oder Anhydride dieser Säuren, insbesondere o-Phosphorsäure, m-Phosphorsäure, Poly-Phosphorsäure, unterschiedlichste Schwefelsäuren, verschiedenste Kieselsäuren, unterschiedlichste Borsäuren, Oxalsäure, Bernsteinsäure, Glutarsäure, Adipinsäure, Phthalsäure, Citronensäure oder Mischungen davon, verestert ist.

26. Verwendung nach einem der Ansprüche 1 bis 25, **dadurch gekennzeichnet, dass** die AP-KS durch anorganische und/oder organische α-substituierte Säuren und/oder Salze, Ester und/oder Anhydriden dieser Säuren, insbesondere α-Halogencarbonsäuren, Chlorhydroxyalkylsulfonaten, Chlorhydroxyalkylphosphonaten, verethert ist.

27. Verwendung nach einem der Ansprüche 1 bis 26, **dadurch gekennzeichnet, dass** AP-KS durch Amino-, Imino-, Ammonium-, Sulfonium-, Phosphoniumgruppen oder Mischungen davon, vorzugsweise durch stickstoffhaltige Gruppen, insbesondere primäre, sekundäre, tertiäre und quartäre Amine, kationisch modifiziert ist.

28. Verwendung nach einem der Ansprüche 1 bis 27, **dadurch gekennzeichnet, dass** AP-KS elektropositiv geladene quartäre Ammoniumgruppen enthält.

29. Verwendung nach einem der Ansprüche 1 bis 28, **dadurch gekennzeichnet, dass** AP-KS in Form einer Mischung von mehreren verschiedenen Derivaten enthalten ist.

30. Verwendung nach einem der Ansprüche 1 bis 29, **dadurch gekennzeichnet, dass** es weiters Sedimentationsbeschleuniger, Stabilisatoren, Dispergiermittel, Entschäumer, Weichmacher, auf nicht-Stärke-Basis beruhende Klebstoffe oder Klebstoffvorprodukte, Puffersalze, Konservierungsstoffe oder Mischungen davon umfasst.

31. Verwendung von AP-KS als Flockungs- oder Bindemittel bei der Herstellung keramischer Erzeugnisse.

32. Verwendung einer Flockungs- oder Bindemittelzusammensetzung nach einem der Ansprüche 1 bis 30 zur Herstellung keramischer Erzeugnisse.

33. Verwendung eines Slurry zur Herstellung keramischer Erzeugnisse, **dadurch gekennzeichnet, dass** im Slurry ein Flockungs- oder Bindemittel nach einem der Ansprüche 1 bis 30 verwendet wird.

34. Verwendung nach Anspruch 33, **dadurch gekennzeichnet, dass** der Slurry AP-KS in einer Konzentration von 0,001 bis 0,5 Gew.-% umfasst.

35. Verwendung nach Anspruch 33 oder 34, **dadurch gekennzeichnet, dass**, der Slurry weiters anorganische Fasern, insbesondere Fasern auf Basis von Aluminiumsilikaten, Füllstoffe, insbesondere Oxide von Aluminium oder Aluminiumsilikaten oder Kreide, organische Materialien, insbesondere organische Fasern aus Zellulosen oder Polyethylen, anorganische Bindemittel, insbesondere kolloidales Silika, oder Mischungen davon umfasst.

36. Verfahren zur Herstellung von keramischen Erzeugnissen, umfassend die folgenden Schritte:
- Herstellen eines Slurry in dem ein Flockungs- oder Bindemittel einem der Ansprüche 1 bis 30 verwendet wird, und
- thermisches Behandeln bei einer Temperatur von über 300°C, insbesondere über 500°C.

37. Verfahren nach Anspruch 36, **dadurch gekennzeichnet, dass** das Herstellen des Slurry durch
- Bereitstellen einer wässerigen Suspension an anorganischen Fasern, und
- Zusetzen eines anorganischen Bindemittels, insbesondere Silica Sol, und eines erfindungsgemäßen Flockungs- und Bindemittels nach einem der Ansprüche 1 bis 30, sowie gegebenenfalls weiterer Zusatzmittel und Füllstoffe,
erfolgt.

38. Verfahren nach Anspruch 36 oder 37, **dadurch gekennzeichnet, dass** vor dem thermischen Behandlungsschritt ein Trocknungsschritt erfolgt, wobei der Trocknungsschritt vorzugsweise bei 100 bis 200°C, insbesondere bei etwa 120 bis 140°C, erfolgt.

39. Verfahren nach einem der Ansprüche 36 bis 38, **dadurch gekennzeichnet, dass** der thermische Behandlungsschritt eine Sinterung umfasst.

40. Verfahren nach einem der Ansprüche 36 bis 39, **dadurch gekennzeichnet, dass** der thermische Behandlungsschritt bei einer maximalen Temperatur von 800 bis 2500°C, vorzugsweise von 1500 bis 2000°C, insbesondere bei etwa 1800°C, durchgeführt wird.

41. Verfahren nach einem der Ansprüche 36 bis 40, **dadurch gekennzeichnet, dass** vor dem thermischen Behandlungsschritt und gegebenenfalls vor dem Trocknungsschritt eine mechanische Entfernung des Wassers vorgenommen wird.

42. Verfahren nach einem der Ansprüche 36 bis 41, **dadurch gekennzeichnet, dass** vor dem thermischen Behandlungsschritt ein Formungsschritt durchgeführt wird..

43. Verfahren nach einem der Ansprüche 36 bis 42, **dadurch gekennzeichnet, dass** der thermische Behandlungsschritt durch eine Penetration von flüssigen Metallen oder flüssigen Metalllegierungen erfolgen kann

44. Keramisches Erzeugnis, erhältlich nach einem Verfahren gemäß einem der Ansprüche 36 bis 43, das eine Dichte von 410 kg/m³ aufweist.

## Claims

1. The use of a flocculant or binder composition for the production of ceramics products, **characterized in that** the composition comprises amylopectin potato starch (AP-PS).

2. The use according to claim 1, **characterized in that** said AP-PS is a modified, in particular, a cationically modified AP-PS.

3. The use according to claim 1 or 2, **characterized in that** said AP-PS is modified with nitrogen-containing groups, in particular, with electropositively charged quaternary ammonium groups.

4. The use according to any one of claims 1 to 3, **characterized in that** said AP-PS is an AP-PS sulfamate.

5. The use according to any one of claims 1 to 4, **characterized in that** said AP-PS was obtained from a potato modified by breeding or by molecular-biological or genetic-engineering techniques for the purpose of amylose inhibition.

6. The use according to any one of claims 1 to 5, **characterized in that** said AP-PS was obtained from a potato inhibited with respect to amylose formation by antisense inhibition of a GBSS gene.

7. The use according to any one of claims 1 to 6, **characterized in that** said AP-PS was obtained from a potato inhibited with respect to amylose formation by cosuppression.

8. The use according to any one of claims 1 to 7, **characterized in that** said AP-PS has an amylopectin content of at least 95%, preferably of at least 98%.

9. The use according to any one of claims 1 to 8, **characterized in that** said AP-PS is contained as a swelling starch.

10. The use according to any one of claims 1 to 9, **characterized in that** in water at 25°C, said AP-PS is soluble to at least 90%, preferably to 95%, in particular, to more than 99%.

11. The use according to any one of claims 1 to 10, **characterized in that** said AP-PS is degraded by physical, in particular, by thermal and/or mechanical methods.

12. The use according to any one of claims 1 to 11, **characterized in that** said AP-PS is chemically degraded, particularly by thermochemical, oxidative or acidic methods.

13. The use according to any one of claims 1 to 12, **characterized in that** said AP-PS is contained in the etherified form.

14. The use according to any one of claims 1 to 13, **characterized in that** said AP-PS is contained as a methyl, ethyl, hydroxyethyl, hydroxypropyl, hydroxybutyl, carboxymethyl, cyanoethyl or carbamoyl ether.

15. The use according to any one of claims 1 to 14, **characterized in that** said AP-PS is contained in the esterified form.

16. The use according to any one of claims 1 to 15, **characterized in that** it comprises an esterified AP-PS in whose ester residue RCOO-, the residue R is an alkyl, aryl, alkenyl, alkaryl or aralkyl residue having 1 to 17 carbon atoms, preferably 1 to 6 carbon atoms, in particular, 1 or 2 carbon atoms.

17. The use according to any one of claims 1 to 16, **characterized in that** said AP-PS is contained as an acetic, propionic, butyric, stearic, phthalic, succinic, oleic, maleic, fumaric or benzoic acid ester.

18. The use according to any one of claims 1 to 17, **characterized in that** said AP-PS is contained in the crosslinked form.

19. The use according to any one of claims 1 to 18, **characterized in that** said AP-PS is crosslinked with epichlorohydrin or 1,3-dichloro-2-propanol, optionally mixed with (poly)amines.

20. The use according to any one of claims 1 to 19, **characterized in that** said AP-PS is crosslinked by reaction with aldehyde-releasing reagents such as N,N'-dimethylol-N,N'-ethyleneurea, with phosphoroxychloride, sodium trimetaphosphate, di- or polyepoxides, mixed anhydrides of carboxylic acids with di- or tribasic acids such as adipic acid/Ac₂O, glyoxal or aldehydes such as formic, acetic or propionic aldehyde.

21. The use according to any one of claims 1 to 20, **characterized in that** said AP-PS is modified by cationic and/or anionic groups.

22. The use according to any one of claims 1 to 21, **characterized in that** said AP-PS is present as a starch graft polymer or a starch graft copolymer.

23. The use according to any one of claims 1 to 22, **characterized in that** said AP-PS graft (co)polymer is present as an emulsion polymer.

24. The use according to any one of claims 1 to 23, **characterized in that** said AP-PS has a degree of substitution of 0.00001 to 3, preferably 0.001 to 2, in particular, 0.005 to 1.

25. The use of a flocculant or binder composition according to any one of claims 1 to 24, **characterized in that** said AP-PS is esterified by inorganic and/or organic, preferably heterovalent, in particular, bivalent acids and/or salts, esters and/or anhydrides of these acids, in particular, o-phosphoric acid, m-phosphoric acid, poly-phosphoric acid, various sulfuric acids, various silicic acids, various boric acids, oxalic acid, succinic acid, glutaric acid, adipic acid, phthalic acid, citric acid or mixtures thereof.

26. The use according to any one of claims 1 to 25, **characterized in that** said AP-PS is etherified by inorganic and/or organic α-substituted acids and/or salts, esters and/or anhydrides of these acids, in particular α-halocarboxylic acids, chlorohydroxy alkyl sulfonates, chlorohydroxy alkyl phosphonates.

27. The use according to any one of claims 1 to 26, **characterized in that** said AP-PS is cationically modified by amino, imino, ammonium, sulfonium, phosphonium groups or mixtures thereof, preferably by nitrogen-containing groups, in particular, primary, secondary, tertiary and quaternary amines.

28. The use according to any one of claims 1 to 27, **characterized in that** said AP-PS contains electropositively charged quaternary ammonium groups.

29. The use according to any one of claims 1 to 28, **characterized in that** said AP-PS is contained in the form of a mixture of several different derivatives.

30. The use according to any one of claims 1 to 29, **characterized in that** is further comprises sedimentation accelerators, stabilizers, dispersants, anti-foaming agents, softeners, non-starch-based adhesives or adhesive precursors, buffer salts, preserving agents or mixtures thereof.

31. The use of AP-PS as a flocculant or binder in the production of ceramic products.

32. The use of a flocculant or binder composition according to any one of claims 1 to 30 for the production of ceramic products.

33. The use of a slurry for the production of ceramic products, **characterized in that** a flocculant or binder according to any one of claims 1 to 30 is used in the slurry.

34. The use according to claim 33, **characterized in that** the slurry comprises AP-PS at a concentration of from 0.001 to 0.5 weight percent.

35. The use according to claim 33 or 34, **characterized in that** the slurry further comprises inorganic fibers, in particular fibers based on aluminum silicates, fillers, in particular oxides of aluminum or aluminum silicates or chalk, organic materials, in particular organic fibers made of celluloses or polyethylene, inorganic binders, in particular colloidal silica, or mixtures thereof.

36. A method for producing ceramic products, comprising the following steps:
- preparing a slurry in which a flocculant or binder according to any one of claims 1 to 30 is used, and
- thermal treatment at a temperature of above 300°C, in particular above 500°C.

37. A method according to claim 36, **characterized in that** the preparation of said slurry is effected by
- providing an aqueous suspension of inorganic fibers and
- adding an inorganic binder, in particular silica sol, and an inventive flocculant and binder according to any one of claims 1 to 30, as well as optionally further additives and fillers.

38. A method according to claim 36 or 37, **characterized in that** a drying step is effected prior to said thermal treatment step, said drying step being preferably carried out at 100 to 200°C, in particular, at approximately 120 to 140°C.

39. A method according to any one of claims 36 to 38, **characterized in that** said thermal treatment step comprises sintering.

40. A method according to any one of claims 36 to 39, **characterized in that** said thermal treatment step is carried out at a maximum temperature of from 800 to 2500°C, preferably 1500 to 2000°C, in particular, at approximately 1800°C.

41. A method according to any one of claims 36 to 40, **characterized in that** said thermal treatment step and optionally said drying step are preceded by mechanical water removal.

42. A method according to any one of claims 36 to 41, **characterized in that** said thermal treatment step is preceded by a forming step.

43. A method according to any one of claims 36 to 42, **characterized in that** said thermal treatment step is feasible by the penetration of liquid metals or liquid metal alloys.

44. A ceramic product obtainable by a method according to any one of claims 36 to 43 and having a density of 410 kg/m³.

## Revendications

1. Utilisation d'une composition de floculant ou de liant pour la préparation de produits céramiques, **caractérisée en ce que** la composition comprend l'amylopectine-amidon de pomme de terre (AP-APT).

2. Utilisation selon la revendication 1, **caractérisée en ce que** le AP-APT est un AP-APT modifié, en particulier modifié de manière cationique.

3. Utilisation selon la revendication 1 ou 2, **caractérisée en ce que** le AP-APT est modifié avec des groupes contenant de l'azote, en particulier avec des groupes ammonium quaternaires chargés électropositifs.

4. Utilisation selon l'une des revendications 1 à 3, **caractérisée en ce que** le AP-APT est un AP-APT-sulfamate.

5. Utilisation selon l'une des revendications 1 à 4, **caractérisée en ce que** le AP-APT est obtenu d'une pomme de terre, qui est modifiée pour inhiber l'amylose par culture ou des méthodes de biologie moléculaire ou de génie génétique.

6. Utilisation selon l'une des revendications 1 à 5, **caractérisée en ce que** le AP-APT est obtenu d'une pomme de terre, qui est inhibée par inhibition antisens d'un gène GBSS concernant la formation de l'amylose.

7. Utilisation selon l'une des revendications 1 à 6, **caractérisée en ce que** le AP-APT est obtenu d'une pomme de terre, qui est inhibée par cosuppression concernant la formation de l'amylose.

8. Utilisation selon l'une des revendications 1 à 7, **caractérisée en ce que** le AP-APT a une teneur en amylopectine d'au moins 95%, de préférence au moins 98%.

9. Utilisation selon l'une des revendications 1 à 8, **caractérisée en ce que** le AP-APT est présent en tant qu'amidon gonflable.

10. Utilisation selon l'une des revendications 1 à 9, **caractérisée en ce que** le AP-APT est soluble dans l'eau, à 25°C, à au moins 90%, de préférence à 95%, en particulier à plus de 99%.

11. Utilisation selon l'une des revendications 1 à 10, **caractérisée en ce que** le AP-APT est physiquement dégradé, en particulier par des procédés thermiques et/ou mécaniques.

12. Utilisation selon l'une des revendications 1 à 11, **caractérisée en ce que** le AP-APT est chimiquement dégradé, en particulier par des procédés thermochimiques, oxydants ou acides.

13. Utilisation selon l'une des revendications 1 à 12, **caractérisée en ce que** le AP-APT est présent sous forme éthérée.

14. Utilisation selon l'une des revendications 1 à 13, **caractérisée en ce que** le AP-APT est présent sous forme de l'éther méthylique, éthylique, hydroxyéthylique, hydroxypropylique, hydroxybutylique, carboxyméthylique, cyanoéthylique ou de carbamoyléther.

15. Utilisation selon l'une des revendications 1 à 14, **caractérisée en ce que** le AP-APT est présent sous forme estérifiée.

16. Utilisation selon l'une des revendications 1 à 15, **caractérisée en ce qu'**est présent un AP-APT estérifié, dans le reste ester RCOO duquel le reste R est un reste alkyle, aryle, alcényle, alkaryle ou aralkyle ayant 1 à 17 atomes de carbone, de préférence 1 à 6 atomes de carbone, en particulier avec un ou deux atomes de carbone.

17. Utilisation selon l'une des revendications 1 à 16, **caractérisée en ce que** le AP-APT est présent en tant qu'ester de l'acide acétique, de l'acide propionique, de l'acide butyrique, de l'acide stéarique, de l'acide phtalique, de l'acide succinique, de l'acide oléique, de l'acide maléique, de l'acide fumarique ou de l'acide benzoïque.

18. Utilisation selon l'une des revendications 1 à 17, **caractérisée en ce que** le AP-APT est présent sous forme réticulée.

19. Utilisation selon l'une des revendications 1 à 18, **caractérisée en ce que** le AP-APT est réticulé avec l'épichlorhydrine ou le 1,3-dichloro-2-propanol, le cas échéant en mélange avec des (poly)amines.

20. Utilisation selon l'une des revendications 1 à 19, **caractérisée en ce que** le AP-APT est réticulé par réaction avec des réactifs libérant un aldéhyde, comme la N,N'-diméthylol-N,N'-éthylènurée, avec l'oxychlorure de phosphore, le trimétaphosphate de sodium, des di-ou polyépoxydes, des anhydrides mixtes d'acide carboxylique avec des acides di- ou tribasiques, comme acide adipique/Ac₂O, le glyoxal ou des aldéhydes, comme le formaldéhyde, l'acétaldéhyde ou le propionaldéhyde.

21. Utilisation selon l'une des revendications 1 à 20, **caractérisée en ce que** le AP-APT est modifié par des groupes cationiques et/ou anioniques.

22. Utilisation selon l'une des revendications 1 à 21, **caractérisée en ce que** le AP-APT est présent comme un polymère greffé d'amidon ou un copolymère amidon-greffage.

23. Utilisation selon l'une des revendications 1 à 22, **caractérisée en ce que** le (co)polymère AP-APT-greffage est présent comme un polymère en émulsion.

24. Utilisation selon l'une des revendications 1 à 23, **caractérisée en ce que** le AP-APT a un taux de substitution allant de 0,00001 à 3, de préférence de 0,001 à 2, en particulier de 0,005 à 1.

25. Composition de floculant ou liant selon l'une des revendications 1 à 24, **caractérisée en ce que** le AP-APT est estérifié par des acides et/ou sels, esters et/ou anhydrides de ces acides, inorganiques et/ou organiques, de préférence de différentes valences, en particulier bivalents, en particulier l'acide o-phosphorique, l'acide m-phosphorique, l'acide polyphosphorique, différents acides sulfuriques, différents acides siliciques, différents acides boriques, l'acide oxalique, l'acide succinique, l'acide glutarique, l'acide adipique, l'acide phtalique, l'acide citrique ou leurs mélanges.

26. Utilisation selon l'une des revendications 1 à 25, **caractérisée en ce que** le AP-APT est éthérifié par des acides et/ou sels, esters et/ou anhydrides de ces acides, α-substitués, inorganiques et/ou organiques, en particulier des acides α-halogénocarboxyliques, des sulfonates de chlorhydroxyalkyle, des phosphonates de chlorhydroxyalkyle.

27. Utilisation selon l'une des revendications 1 à 26, **caractérisée en ce que** le AP-APT est modifié de manière cationique par des groupes amino, imino, ammonium, sulfonium, phosphonium ou leurs mélanges, de préférence par des groupes azotés, en particulier des amines primaires, secondaires, tertiaires et quaternaires.

28. Utilisation selon l'une des revendications 1 à 27, **caractérisée en ce que** le AP-APT contient des groupes ammonium quaternaires chargés électropositifs.

29. Utilisation selon l'une des revendications 1 à 28, **caractérisée en ce que** le AP-APT est présent sous la forme d'un mélange avec plusieurs dérivés différents.

30. Utilisation selon l'une des revendications 1 à 29, **caractérisée en ce qu'**il comprend par ailleurs, des accélérateurs de la sédimentation, des stabilisants, des agents de dispersion, des anti-mousse, des plastifiants, des colles ou précurseurs de colle, non à base d'amidon, des sels tampon, des agents de conservation ou leurs mélanges.

31. Utilisation de AP-APT comme floculant ou liant dans la préparation de produits céramiques.

32. Utilisation d'une composition de floculant ou de liant selon l'une des revendications 1 à 30, pour la préparation de produits céramiques.

33. Utilisation d'une masse pour la préparation de produits céramiques, **caractérisée en ce que** dans la masse, on utilise un floculant ou un liant selon l'une des revendications 1 à 30.

34. Utilisation selon la revendication 33, **caractérisée en ce que** la masse comprend le AP-APT en une concentration allant de 0,001 à 0,5% en poids.

35. Utilisation selon la revendication 33 ou 34, **caractérisée en ce que** la masse comprend par ailleurs, des fibres, en particulier des fibres à base de silicates d'aluminium, des charges, en particulier des oxydes d'aluminium ou des silicates d'aluminium ou la craie, des matériaux organiques, en particulier des fibres organiques à partir de cellulose ou de polyéthylène, des liants inorganiques, en particulier la silice colloïdale, ou leurs mélanges.

36. Procédé de préparation de produits céramiques, comprenant les étapes suivantes :
- préparation d'une masse dans laquelle on utilise un floculant ou un liant selon l'une des revendications 1 à 30, et
- traitement thermique à une température de plus de 300°C, en particulier plus de 500°C.

37. Procédé selon la revendication 36, **caractérisé en ce que** la préparation de la masse est réalisée par
- préparation d'une suspension aqueuse des fibres inorganiques, et
- addition d'un liant inorganique, en particulier un sol de silice, et d'un un floculant ou un liant selon l'une des revendications 1 à 30, ainsi que le cas échéant, d'autres additifs et charges.

38. Procédé selon la revendication 36 ou 37, **caractérisé en ce qu'**avant l'étape de traitement thermique, on réalise une étape de séchage, où l'étape de séchage est réalisée de préférence, de 100 à 200°C, en particulier d'environ 120 à 140°C.

39. Procédé selon l'une des revendications 36 à 38, **caractérisé en ce que** l'étape de traitement thermique comprend un frittage.

40. Procédé selon l'une des revendications 36 à 39, **caractérisé en ce que** l'étape de traitement thermique est réalisée à une température maximale de 800 à 2500°C, de préférence de 1500 à 2000°C, en particulier à environ 1800°C.

41. Procédé selon l'une des revendications 36 à 40, **caractérisé en ce qu'**avant l'étape de traitement thermique et le cas échéant, avant l'étape de séchage, on procède à une élimination mécanique de l'eau.

42. Procédé selon l'une des revendications 36 à 41, **caractérisé en ce qu'**avant l'étape de traitement thermique, on réalise une étape de moulage.

43. Procédé selon l'une des revendications 36 à 42, **caractérisé en ce que** l'étape de traitement thermique peut être réalisée par une pénétration de métaux liquides ou d'alliages liquides.

44. Produit céramique, obtenu par un procédé selon une des revendications 36 à 43, qui présente une masse spécifique de 410 kg/m³.
